# EUROPEAN PATENT SPECIFICATION

(11) **EP 2 019 237 B1**
(45) Date of publication and mention of the grant of the patent: **03.11.2010**
(21) Application number: 08013285.5
(22) Date of filing: 23.07.2008
(51) Int. Cl.: F16H 63/30

(54) **Automatic transmission control apparatus**
Vorrichtung zur Steuerung eines Automatikgetriebes
Appareil de contrôle de transmission automatique

(30) Priority: 24.07.2007 JP 2007191560
(43) Date of publication of application: 28.01.2009
(73) Proprietor: Yamaha Hatsudoki Kabushiki Kaisha, Shizuoka-ken 438-8501 (JP)
(72) Inventor: Takeuchi, Yoshihiko, Iwata-shi Shizuoka-ken 438-8501 (JP)
(74) Representative: Grünecker, Kinkeldey, Stockmair & Schwanhäusser Anwaltssozietät

(56) References cited:
- DE-A1- 3 735 184
- JP-A- 5 039 865
- US-A- 5 101 680
- US-B1- 6 231 012

## Description

The present invention relates to an automatic transmission control apparatus automatically changing a shift gear of a transmission apparatus, and in particular to a power unit provided with the automatic transmission control apparatus and a vehicle, in particular straddle-type vehicle such as a motorcycle.

There has been conventionally known a vehicle provided with an automatic transmission control apparatus automatically changing a shift gear. Generally, the automatic transmission control apparatus is provided with a transmission apparatus having a plurality of shift gear pairs having different transmission gear ratios from each other, a gear selecting mechanism selecting the shift gear pair transmitting a power among the plurality of shift gear pairs, a shift actuator driving the gear selecting mechanism, and a shift power transmission mechanism transmitting a power of the shift actuator to the gear selecting mechanism.

In this case, there is a case that the gear is not smoothly engaged or disengaged at a time of changing gears in the transmission apparatus having a dog gear. In the case mentioned above, for example, in a foot-operated type transmission apparatus driving the gear selecting mechanism by a shift pedal, the gear is engaged and disengaged by repeatedly adjusting a pedaling operation several times, and the shifting motion is completed. However, if it is intended to automatically carry out the motion mentioned above by the automatic transmission control apparatus, it is necessary to adjust an input by a shift actuator on the basis of a complicated control. On the other hand, if a condition that the gear is not smoothly engaged and disengaged is left, a rotation of a shift power transmission mechanism is brought under control in spite that the shift actuator is under an excited state. Accordingly, the shift actuator cannot be rotated, and there is a problem that the shift actuator comes to an overload state.

Accordingly, in Japanese Patent No. 3044498 (see also JP-A-05039865), on which the preamble of claim 1 is based, there has been proposed an automatic transmission control apparatus structured such that a coil spring is provided between the shift actuator and a shift drum of the gear selecting mechanism. In accordance with the automatic transmission control apparatus, in the case that the rotation of the shift power transmission mechanism is brought into control in spite that the shift actuator is under the excited state, the coil spring is elastically deformed. Accordingly, the overload applied to the shift actuator is prevented.

However, in order to prevent the overload applied to the shift actuator on the elastic deformation of the coil spring, it is necessary to set an elastic coefficient of the coil spring smaller. In other words, it is necessary to set a compression load (hereinafter, refer to as a compression load of the coil spring) at a time when the coil spring is elastically deformed weaker. Specifically, it is necessary to set such as to allow a motion of the shift actuator in a state in which the shift power transmission mechanism stops.

However, the weaker the compression load of the coil spring is, the harder the dog of the dog gear comes off. Accordingly, if the compression load of the coil spring is set weaker, the gears under the engaged state are not smoothly disconnected, so that there is generated a new problem that a time after starting the shift motion until the shift motion is finished becomes longer.

On the other hand, if the compression load of the coil spring is set stronger, it is impossible to suppress the overload applied to the shift actuator to a level which is originally expected. Accordingly, in the case that the compression load of the coil spring is set stronger, it is independently necessary to prevent the overload applied to the shift actuator by suppressing a torque of the shift actuator.

However, if the torque of the shift actuator is suppressed, a rotating speed is reduced. Accordingly, even in this case, there is generated the problem that the time after starting the shift motion until the shift motion is finished becomes longer.

The present invention is made by taking the point mentioned above into consideration.

The document US US-A-5 101 680 (D1) discloses a shear pin disposed between a collar connected to a shift lever and a shift shaft of a manual transmission.

It is an objective of the present invention to provide an automatic transmission control apparatus which can shorten the time after starting the shift motion until the shift motion is finished, while suppressing the overload applied to the shift actuator.

According to the present invention, said objective is solved by an automatic transmission control apparatus comprising: a gear selecting mechanism configured to select a shift gear pair of a transmission apparatus for transmitting driving power from an input to an output of the transmission apparatus; a shift actuator configured to generate power to drive said gear selecting mechanism; a shift power transmission mechanism configured to transmit the power of said shift actuator to said gear selecting mechanism; and a mechanical safety device configured to accomplish an irreversible state change in which a transmission power of the shift power transmission mechanism becomes equal to or less than a predetermined value if said transmission power exceeds the predetermined value. The mechanical safety device has at least one power transmission portion with at least a thin portion and a thick portion, the thin portion being thinner than the thick portion and being configured to plastically deform and/or rupture if the transmission power exceeds the predetermined value.

Accordingly, the deformation of the mechanical safety device indicates a deformation which does not restore to its original state after being once generated. Preferably, the deformation includes a rupture.

As mentioned above, the automatic transmission control apparatus is provided with the mechanical safety device which is preferably deformed in the case that the shift actuator comes to the overload state so as to shut off the transmission of the power from the shift actuator to the gear selecting mechanism. Accordingly, even if the shift actuator comes to the overload state for some reason, the transmission from the shift actuator to the gear selecting mechanism is shut off. Therefore, it is possible to suppress the overload of the shift actuator. Further, the automatic transmission control apparatus neither suppresses the torque of the shift actuator itself for suppressing the overload applied to the shift actuator, nor employs a torque limiter constructed by an elastic member having a small elastic coefficient or the like. Accordingly, it is possible to shorten the time after starting the shift motion until the shift motion is finished. Therefore, in accordance with the automatic transmission control apparatus, it is possible to achieve both the suppression of the overload of the shift actuator and the shortening of the time for the shift motion. Preferably, the mechanical safety device is provided within the shift power transmission mechanism.

According to a preferred embodiment, at least a part including the mechanical safety device is structured detachable.

Further, preferably said mechanical safety device is provided with a rupture portion configured to rupture for accomplishing the irreversible state change.

Still further, preferably said mechanical safety device has a plastic deforming portion configured to plastically deform if the transmission power exceeds the predetermined value.

Preferably, the mechanical safety device is substantially plate-shaped. According to a preferred embodiment, the mechanical safety device is included in a shift rod.

There is also provided a power unit comprising a transmission apparatus with a plurality of shift gear pairs having different transmission ratios and an automatic transmission control apparatus according to one of the above embodiments, whose gear selecting mechanism is configured to select a pair of shift gears of the transmission apparatus.

Preferably, the power unit further comprises an engine and a casing storing at least said engine.

Further, preferably said shift power transmission mechanism has at least a first transmission mechanism portion and a second transmission mechanism portion, said second transmission mechanism portion being detachable with respect to said first transmission mechanism portion, and said mechanical safety device is provided within said second transmission mechanism portion.

Still further, preferably said first transmission mechanism portion is positioned within said casing, and said second transmission mechanism portion is positioned out of said casing.

In the preferred power unit mentioned above, the mechanical safety device is provided within the second transmission mechanism portion arranged outside of the casing in the shift power transmission mechanism. Further, the second transmission mechanism portion is structured such as to be detachable with respect to the first transmission mechanism portion arranged within the casing in the shift power transmission mechanism. Accordingly, in the case that the mechanical safety device works, it is possible to easily replace the second transmission mechanism portion including the mechanical safety device without disassembling the casing. Therefore, in accordance with the automatic transmission control apparatus of the power unit mentioned above, even if the mechanical fuse works, it is possible to immediately restore to the state in which the shift motion can be carried out, by replacing the shift rod, and it is possible to maintain the effect mentioned above that the overload applied to the shift actuator is suppressed and the time after starting the shift motion until the shift motion is finished is shortened.

Preferably, said second transmission mechanism portion has a first member and a second member provided closer to said gear selecting mechanism side than said first member, wherein said mechanical safety device is fixed to said second member between said first member and said second member, and, preferably, has a power transmission portion engaging with said first member so as to transmit the power from said first member to said second member, and wherein said power transmission portion is preferably detached from said second member if said transmitted power becomes larger than the predetermined value.

Further, preferably said second transmission mechanism portion has a first member and a second member provided closer to said gear selecting mechanism side than said first member, wherein said mechanical safety device is fixed to said first member between said first member and said second member, and, preferably, has a power transmission portion engaging with said second member so as to transmit the power from said first member to said second member, and wherein said power transmission portion is preferably detached from said first member if said transmitted power becomes larger than the predetermined value.

Still further, preferably an insertion hole, into which said first or second member is inserted, is formed in the other of said first or second member, and, preferably, a concave portion is formed in an inner wall surface of the other of said first or second member forming said insertion hole, said power transmission portion being retained in said concave portion.

Yet further still, preferably said power transmission portion has a substantial plate-like body which is inserted into a notch portion, preferably, at an end of a rotatable shaft of the second transmission mechanism portion.

There is also provided a vehicle, in particular straddle-type vehicle such as a motorcycle, with a power unit according to one of the above embodiments.

In accordance with the preferred vehicle mentioned above, since the straddle-type vehicle is provided with the power unit having the mechanical fuse, there can be provided the straddle-type vehicle which can shorten the time after starting the shift motion until the shift motion is finished, while suppressing the overload applied to the shift actuator.

In accordance with the present invention, there can be provided the automatic transmission control apparatus which can shorten the time after starting the shift motion until the shift motion is finished, while suppressing the overload applied to the shift actuator, the power unit provided with the automatic transmission control apparatus, and the straddle-type vehicle.

In the following, the present invention is explained in greater detail by means of embodiments thereof in conjunction with the accompanying drawings, wherein:
- Fig. 1: is a side elevational view of a motorcycle;
- Fig. 2: is a side elevational view showing a layout of an actuator of an automatic transmission control apparatus;
- Fig. 3: is a cross sectional view of a power unit;
- Fig. 4: is an exploded cross sectional view of a shift motor and a shift power transmission mechanism;
- Fig. 5: is a side elevational view of a clutch operation unit;
- Fig. 6: is a side elevational view of the clutch operation unit;
- Fig. 7: is a view showing a shift rod in Fig. 4 in an enlarged manner;
- Fig. 8: is a side elevational view showing a portion near the shift rod in an enlarged manner;
- Fig. 9: is a view showing a portion near a power transmission portion in Fig. 7 in an enlarged manner;
- Fig. 10: is a system view of an automatic transmission control mechanism,
- Fig. 11: is a perspective view of a switch portion of a handle grip,
- Fig. 12(a): is a cross sectional view showing a portion near the power transmission portion before being deformed in an enlarged manner;
- Fig. 12(b): is a cross sectional view showing the portion near the power transmission portion after being deformed in an enlarged manner;
- Fig. 13: is a side elevational view showing a portion near a third shaft, a power transmission portion and an operation lever in accordance with a modified embodiment 1;
- Fig. 14: is an exploded perspective view of the third shaft, the power transmission portion and the operation lever in accordance with the modified embodiment 1;
- Fig. 15: is a cross sectional view of a power unit in accordance with a modified embodiment 2; and
- Fig. 16: is an exploded perspective view of a third shaft, a power transmission portion, a coupling member and a shift operation shaft in accordance with a modified embodiment 2.

### Among others, the following reference signs are used in the figures:

- 1: motorcycle (straddle-type vehicle)
- 20: power unit
- 31: crank shaft
- 32: crank case (casing)
- 40: transmission apparatus
- 41: main shaft
- 42: drive shaft
- 43: gear selecting mechanism
- 44: clutch mechanism
- 49: shift gear
- 50: automatic transmission control apparatus
- 70: shift motor (shift actuator)
- 80: shift power transmission mechanism
- 81: speed reducing mechanism (second transmission mechanism portion)
- 82: shift rod (second transmission mechanism portion)
- 82A: first rod structure portion (first member)
- 82B: second rod structure portion (second member)
- 82e: concave portion
- 82f: power transmission portion
- 82s: insertion hole
- 82t: inner wall surface
- 82x: thin portion
- 82y: thick portion
- 83: shift link mechanism (first transmission mechanism portion)
- 84: operation lever (second transmission mechanism portion)
- 84a: engagement hole
- 85: operation lever
- 88: mechanical fuse (mechanical safety device)
- 420: shift gear
- 421: shift cam (gear selecting mechanism)
- 422: shift fork (gear selecting mechanism)

It has been found that there is a tendency that the overload applied to the shift actuator tends to occur in a specific state. In this case, as the specific state, for example, there is listed up a case that the gear is not smoothly engaged or disengaged at a time of changing the gear pair transmitting the power, or the like. Specifically, for example, the specific state includes a time when the dog of one gear is hard to come off from a hole portion of the other gear in the combination to be disengaged, and suddenly comes off at one point, ant the dog of one gear of the combination to be newly engaged is not accurately fitted to the hole portion of the other gear, so that the dog of one gear comes into collision with a side surface of the other gear, in the case of changing the combination of the gears to be engaged.

Further, it has been found that the overload tends to be applied to the shift actuator in the specific state as mentioned above, and a generation frequency of the specific state mentioned above is low. As a result, it has been found that a probability at which the overload is generated in the shift actuator is low.

Accordingly, the automatic transmission control apparatus is provided with the mechanical fuse shutting off the transmission of the power from the shift actuator to the gear selecting mechanism, by deforming in the case that the overload is generated in the shift actuator. Further, preferably the mechanical fuse is provided in the detachable shift power transmission mechanism. Further, preferably the mechanical fuse is provided outside of the casing storing the engine.

A description will be in detail given below of an embodiment with reference to the accompanying drawings.

A description will be given below of an embodiment of a straddle-type vehicle. In this case, the following embodiment is not limited thereto. The straddle-type vehicle in accordance with this embodiment is constituted by a motorcycle, however, the straddle-type vehicle is not limited to this, but may be constituted by a motor tricycle, a buggy vehicle or the like. In general, the straddle-type vehicle has a body frame and a seat on which a rider can be seated straddling the body frame when being seated.

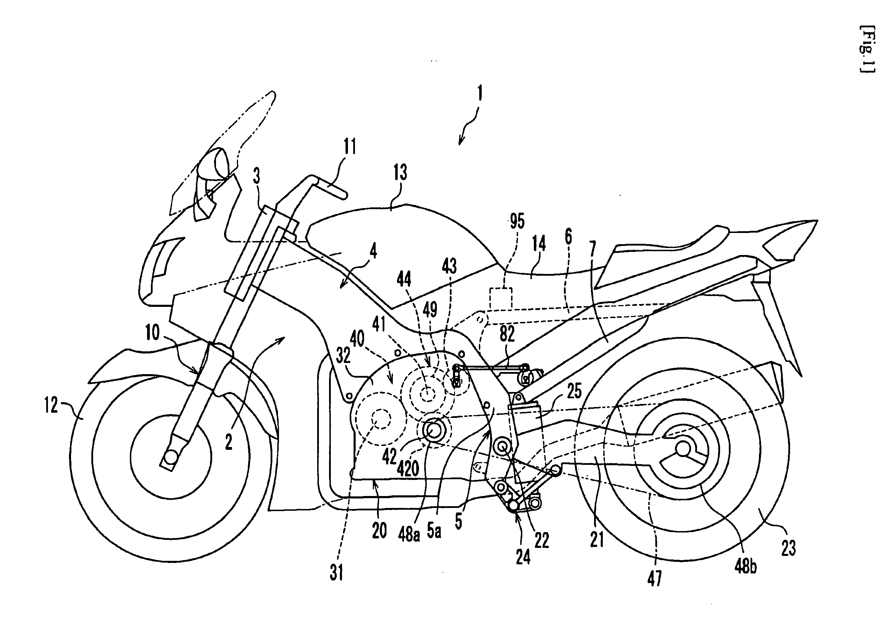

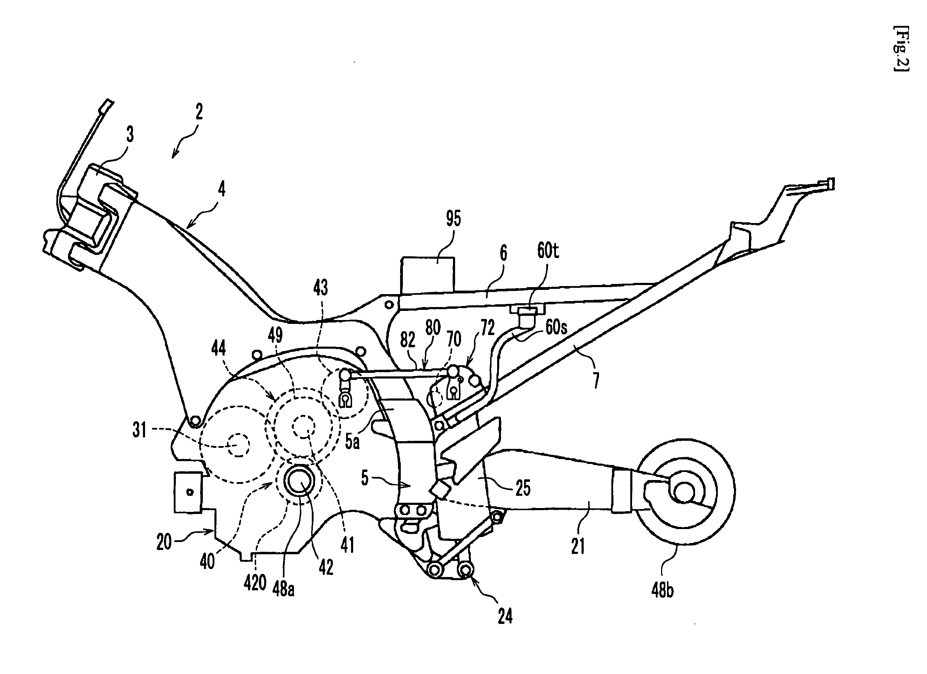

As shown in Figs. 1 and 2, a motorcycle 1 in accordance with this embodiment is provided with a head pipe 3 and a vehicle body frame 2. The vehicle body frame 2 at least includes a main frame 4 extending backward from the head pipe 3, and a rear arm bracket 5 extending downward from a rear portion of the main frame 4. A back stay 7 is attached to an upper portion 5a of the rear arm bracket 5. A rear portion of a seat rail 6 and a rear portion of the back stay 7 are coupled to each other.

Further, a front fork 10 is pivoted to the head pipe 3. A steering handle 11 is provided in an upper end of the front fork 10, and a front wheel 12 is provided in a lower end of the front fork 10. A fuel tank 13 is arranged in an upper portion of the main frame 4, and a seat 14 is arranged in a rear side of the fuel tank 13. The seat 14 is mounted on the seat rail 6.

A front end portion of a rear arm 21 is supported with the rear arm bracket 5 so as to freely oscillate up and down via a pivot shaft 22. A rear wheel 23 is supported with a rear end portion of the rear arm 21. The rear arm 21 is supported with the vehicle body frame 2 via a link mechanism 24 and a rear cushion unit 25.

Further, a power unit 20 having an engine serving as a driving source is suspended from the main frame 4 and the rear arm bracket 5. A kind of the engine is not limited at all, however, in the present embodiment, the engine is constituted by a water-cooled four-cycle parallel four-cylinder type engine. The present engine is arranged in a state in which a cylinder axis (not shown) is a little inclined from a horizontal line toward a forward side of a vehicle body. Further, the present engine is stored in a crank case 32 accommodating a crank shaft 31. The crank case 32 is suspended and supported from the vehicle body frame 2 in both sides in a vehicle width direction.

Further, a main shaft 41 is provided in parallel to the crank shaft 31. The crank shaft 31 is coupled to the main shaft 41 via a multiple disc clutch mechanism 44. In this case, a detailed structure of the clutch mechanism 44 will be described later.

A multiple stage shift gear 49 is installed to the main shaft 41. Further, a drive shaft 42 is provided in parallel to the main shaft 41, and shift gears 420 are installed to the drive shaft 42 in such a manner as to correspond to the shift gears 49. Each of the shift gears 49 on the main shaft 41 is engaged with the shift gears 420 installed onto the drive shaft 42. In this case, the shift gears 49 and the shift gears 420 are installed in such a manner that any one or both of them comes to a free rotating state (an idle running state) with respect to the main shaft 41 or the drive shaft 42, except a pair of selected shift gears. Accordingly, a rotation transmission from the main shaft 41 to the drive shaft 42 is achieved only by a pair of selected shift gears.

In this case, in the present embodiment, the transmission apparatus 40 is structured by the main shaft 41 mentioned above, the drive shaft 42, the plural stages of shift gears 49 and shift gears 420, and a gear selecting mechanism 43 selecting the shift gear pair transmitting the power among the plural stages of shift gears 49 and shift gears 420. In other words, the gear selecting mechanism 43 is configured to select a shift gear pair 49, 420 of the transmission apparatus 40 for transmitting driving power from an input side to an output side of said transmission apparatus 40. Further, the transmission apparatus 40 is integrally assembled in the crank case 32.

As shown in Fig. 2, the motorcycle 1 is provided with a shift motor 70 generating the power driving the gear selecting mechanism 43 of the transmission apparatus 40, and a shift power transmission mechanism 80 transmitting a torque generated by the shift motor 70 to the gear selecting mechanism 43.

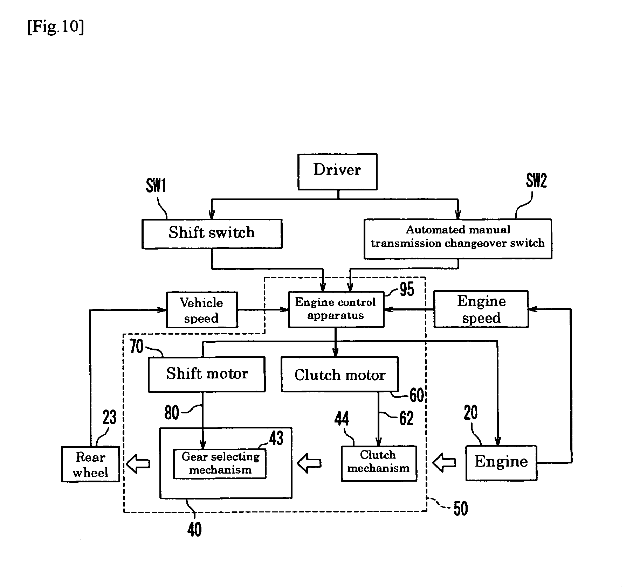

In this case, in the present embodiment, the motorcycle 1 is provided with an automated manual transmission mechanism 50 (see Fig. 10, and hereinafter refer to as "automatic transmission control apparatus 50") automatically actuating the clutch mechanism 44 and switching the shift gear of the transmission apparatus 40. A detailed structure of the automatic transmission control apparatus 50 will be described later.

Further, as shown in Fig. 1, a drive sprocket 48a is provided to the drive shaft 42. On the other hand, a driven sprocket 48b is provided to the rear wheel 23. Further, a chain 47 is wound around the drive sprocket 48a and the driven sprocket 48b. Accordingly, the power of the engine within the power unit 20 transmitted to the drive shaft 42 via the transmission apparatus 40 is transmitted to the rear wheel 23 via the chain 47.

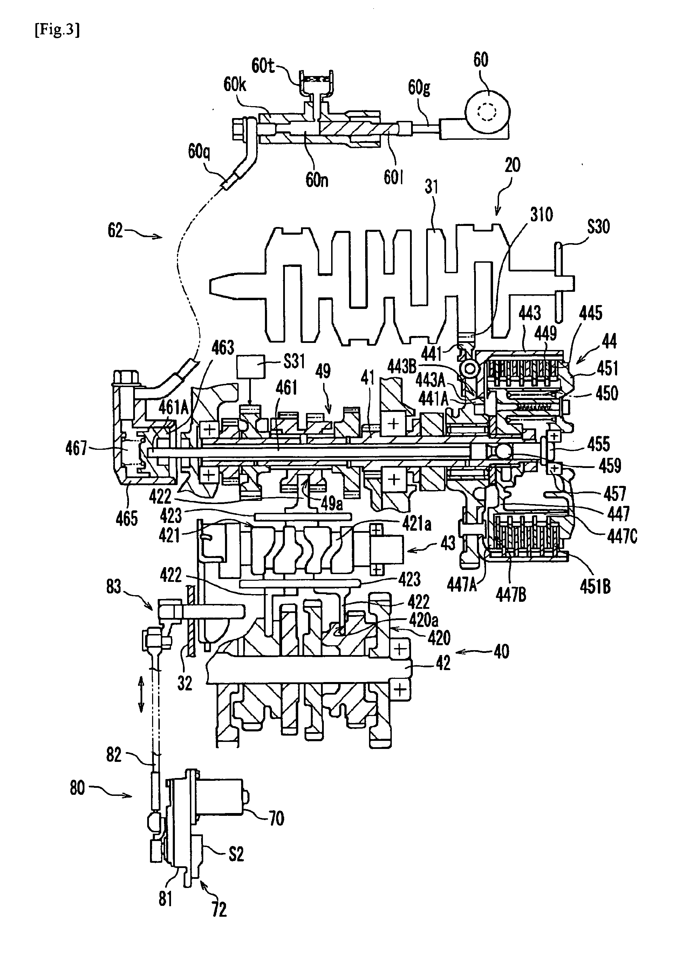

The whole structure of the motorcycle 1 is described above. Next, a description will be in detail given of the clutch mechanism 44 with reference to Fig. 3.

In the present embodiment, the clutch mechanism 44 is constituted by a multiple disc friction clutch, and is provided with a tubular clutch housing 443, a tubular clutch boss 447, a plurality of friction discs 445 and clutch plates 449 serving as a friction plate, and a pressure plate 451. Further, the clutch mechanism 44 is provided with a gear 441 engaging with a gear 310 formed in the crank shaft 31. In this case, an engine speed sensor S30 is installed to an end portion of the crank shaft 31. Further, a main shaft rotating speed sensor S31 is provided in the main shaft 41.

The clutch housing 443 is attached to the main shaft 41 so as to be relatively rotatable. The clutch housing 443 is formed as a tubular shape. Further, one end portion side (a left side in Fig. 3) of the clutch housing 443 is provided with an engagement portion 443B in which an engagement hole 443A is formed. Since an engagement protruding portion 441A of the gear 441 is fitted into the engagement hole 443A, the gear 441 and the clutch housing 443 are engaged so as to be relatively non-rotatable. Further, a plurality of grooves extending in an axial direction of the main shaft 41 are formed in an inner peripheral surface of a portion formed as the tubular shape of the clutch housing 443.

Each of the friction discs 445 is formed as a ring-shaped thin plate form. A plurality of teeth are formed in an outer periphery of each of the friction discs 445. Each of the friction discs 445 is attached to the clutch housing 443 so as to be relatively non-rotatable, on the basis of an engagement of a plurality of teeth formed in the outer periphery of the friction disc 445 with a plurality of grooves formed in the inner peripheral surface of the clutch housing 443. In this case, each of the friction discs 445 is attached to the clutch housing 443 so as to be slidable in the axial direction of the main shaft 41. Each of the friction discs 445 is attached to the clutch housing 443 in such a manner that a plate surface of the friction disc 445 becomes approximately perpendicular to the axial direction of the main shaft 41.

The clutch boss 447 is arranged in an inner side in a diametrical direction of the main shaft 41 than the clutch housing 443, and is attached to the main shaft 41 so as to be relatively non-rotatable. The clutch boss 447 is formed as a tubular shape. One end portion side (a left side in Fig. 3) of the clutch boss 447 is provided with a circular flange portion 447A in which an outer diameter is approximately equal to an outer diameter of the clutch plate 449. The clutch boss 447 is fixed to the main shaft 41 in such a manner that a flange portion 447A is positioned in an engagement portion 443B side of the clutch housing 443. In this case, a pressing portion 447B is formed in a clutch plate 449 side of the flange portion 447A. The pressing portion 447B pinches the friction disc 445 and the clutch plate 449 in the axial direction of the main shaft 41, together with the pressure plate 451. Further, a plurality of grooves 447C extending in the axial direction of the main shaft 41 are formed in an outer peripheral surface of a tubular portion of the clutch boss 447.

Each of the clutch plates 449 is formed as a ring-shaped thin plate form. A plurality of teeth are formed in an inner peripheral surface of each of the clutch plates 449. Each of the clutch plates 449 is attached to the clutch boss 447 so as to be relatively non-rotatable on the basis of an engagement of a plurality of teeth formed in the inner periphery of the clutch plate 449 with a plurality of grooves 447C formed in an outer peripheral surface of the clutch boss 447. In this case, each of the clutch plates 449 is attached to the clutch boss 447 so as to be slidable in the axial direction of the main shaft 41. Each of the clutch plates 449 is attached to the clutch boss 447 in such a manner that a plate surface of the clutch plate 449 becomes approximately perpendicular to the axial direction of the main shaft 41.

Each of the friction discs 445 and each of the clutch plates 449 are alternately arranged in the axial direction of the main shaft 41.

The pressure plate 451 is relatively non-rotatable with the clutch boss 447, and is provided in such a manner as to be slidable with respect to the clutch boss 447 in the axial direction of the main shaft 41. In this case, the pressure plate 451 is driven by a clutch motor 60. Further, a flat pressing portion 451B is formed in the pressure plate 451. The pressing portion 451B pinches the friction disc 445 and the clutch plate 449 in the axial direction of the main shaft 41 together with the pressing portion 447B of the flange portion 447A.

Further, the clutch mechanism 44 is provided with a plurality of springs 450 in such a manner as to surround each of a plurality of tubular grooves 447C. Each of the springs 450 biases the pressure-plate 451 toward a left side in Fig. 3. In other words, each of the springs 450 biases the pressure plate 451 in such a direction that the pressing portion 451B of the pressure plate 451 comes close to the pressing portion 447B of the clutch boss 447.

The pressure plate 451 is engaged with one end portion side (a right side in Fig. 3) of a push rod 455 via a bearing, for example, a deep groove ball bearing 457 or the like, in a center portion of the pressure plate 451, and is rotatable with respect to the push rod 455. The other end portion side (a left side in Fig. 3) of the push rod 455 is engaged with an inner side of one end portion of the tubular main shaft 41. An inner portion of the tubular main shaft 41 is provided with a spherical ball 459 which is adjacent to the other end portion (a left end portion) of the push rod 455, and a left side of the ball 459 is provided with a push rod 461 which is adjacent to the ball 459.

One end portion (a left end portion) 461A of the push rod 461 protrudes from the other end portion (a left end portion) of the tubular main shaft 41. A piston 463 connected to the clutch motor 60 is integrally provided in the protruding one end portion 461A of the push rod 461. The piston 463 is guided by a cylinder main body 465, and is structured slidable in the axial direction of the main shaft 41.

The structure of the clutch mechanism 44 is described above. Next, a description will be given in detail of the gear selecting mechanism 43 and the shift power transmission mechanism 80.

As shown in Fig. 3, the gear selecting mechanism 43 is provided with a shift cam 421 corresponding to a shift input shaft, and a shift fork 422. A plurality of cam grooves 421 a are formed in an outer peripheral surface of the shift cam 421. On the other hand, the shift fork 422 has a shape bifurcating from a root portion to two leading end portions. The root portion of the shift fork 422 is attached to a shift fork shaft 423 so as to be slidable in the axial direction. Further, one leading end portion (not shown) of the shift fork 422 is engaged with the cam groove 421 a of the shift cam 421. On the other hand, the other leading end portion of the shift fork 422 is engaged with annular grooves 49a and 420a provided in the shift gears 49 and 420.

In accordance with the structure mentioned above, if the shift cam 421 is driven so as to be rotated, the shift fork 422 is moved in the axial direction along the cam groove 421 a, and the shift gears 49 and 420 are moved in the axial direction working therewith. Accordingly, only a pair of shift gears 49 and 420 at a position corresponding to a rotation angle of the shift cam 421 come to a fixed state by a spline with respect to the main shaft 41 and the drive shaft 42. In accordance with the structure mentioned above, the shift gear position is defined, and the rotation is transmitted at a predetermined transmission gear ratio between the main shaft 41 and the drive shaft 42 via the shift gear 49 and the shift gear 420.

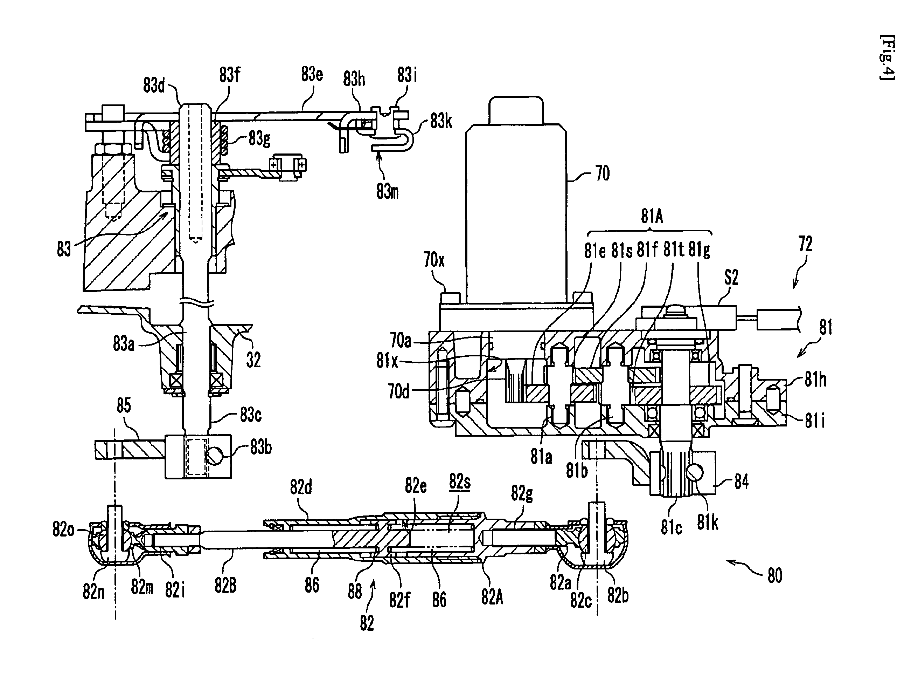

As shown in Fig. 4, the shift power transmission mechanism 80 is provided with a speed reducing mechanism 81 reducing a rotational speed of the shift motor 70, a shift rod 82, and a shift link mechanism 83. In this case, the present embodiment employs an electric shift motor 70 as the shift actuator, however, the shift actuator may be constituted by a hydraulic actuator.

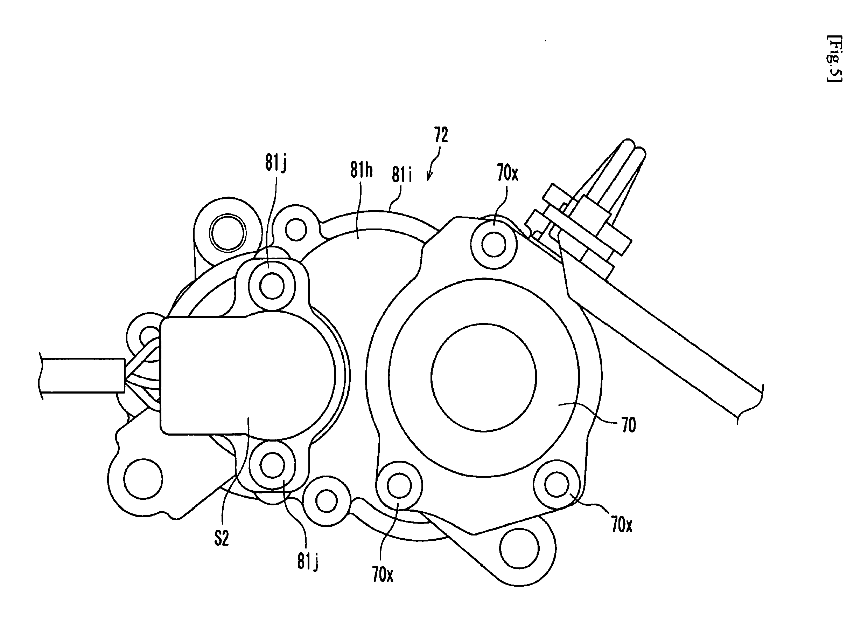

Further, as shown in Fig. 5, in the present embodiment, the shift motor 70 is integrated with a shift position detector S2 and the speed reducing mechanism 81 as a shift actuator unit 72. As mentioned above, an assembling work, maintenance and inspection and the like become easy by integrating the shift motor 70 and the speed reducing mechanism 81 as the shift actuator unit 72. In this case, as shown in Fig. 4, the shift motor 70 and a gear case 81 h of the shift power transmission mechanism 80 are fixed by bolts 70x. An insertion hole 81x is provided in the gear case 81 h, and the motor shaft 70a is inserted into the gear cases 81h and 81i from the insertion hole 81x, and is arranged within the gear cases 81h and 81 i. As mentioned above, the shift power transmission mechanism 80 is structured such as to be detachable with respect to the shift motor 70.

In the present embodiment, the speed reducing mechanism 81 is provided with four shafts 70a, 81a, 81b and 81c, and three speed reducing gears 81e, 81f and 81g. Further, the speed reducing mechanism 81 is stored in the gear cases 81 h and 81 i.

A first shaft of four shafts is constructed by the motor shaft 70a of the shift motor 70. Further, second to fourth shafts are constructed by the first shaft 81 a, the second shaft 81 b and the third shaft 81 c. In this case, the motor shaft 70a corresponding to the first shaft constructs an input shaft in the speed reducing mechanism 81. A gear 70d is formed in a leading end portion of the motor shaft 70a. Further, the third shaft 81 c corresponding to the fourth shaft constructs a drive shaft (an output shaft) of the speed reducing mechanism 81.

The first speed reducing gear 81e is pressure inserted to the first shaft 81 a. The first speed reducing gear 81 e is arranged in such a manner as to be engaged with the gear 70d of the motor shaft 70a. Further, a gear 81 s is formed in the first shaft 81 a.

The second speed reducing gear 81f is pressure inserted to the second shaft 81 b. The second speed reducing gear 81f is arranged in such a manner as to be engaged with the gear 81 s of the first shaft 81 a. Further, a gear 81t is formed in the second shaft 81 b.

The third speed reducing gear 81 g is pressure inserted to the third shaft 81 c. The third speed reducing gear 81g is arranged in such a manner as to be engaged with the gear 81t of the second shaft 81 b.

As mentioned above, a speed reducing gear train 81A reducing the rotational speed of the shift motor 70 is constituted by the first speed reducing gear 81 e, the gear 81 s, the second speed reducing gear 81f, the gear 81t and the third speed reducing gear 81 g. In this case, the first speed reducing gear 81 e existing in a most upstream side in the speed reducing gear train 81A is engaged with the gear 70d. In accordance with the structure mentioned above, the torque of the shift motor 70 is transmitted to the speed reducing gear train 81A via the gear 70d so as to be increased.

Further, a shift position detector S2 is arranged in one end portion of the third shaft 81 c corresponding to the drive shaft (the output shaft) of the speed reducing mechanism 81. The shift position detector (the angle sensor) S2 is arranged in an end portion of the third shaft 81c, and is fastened and fixed to the gear case 81h by attaching bolts 81j, as shown in Fig 5.

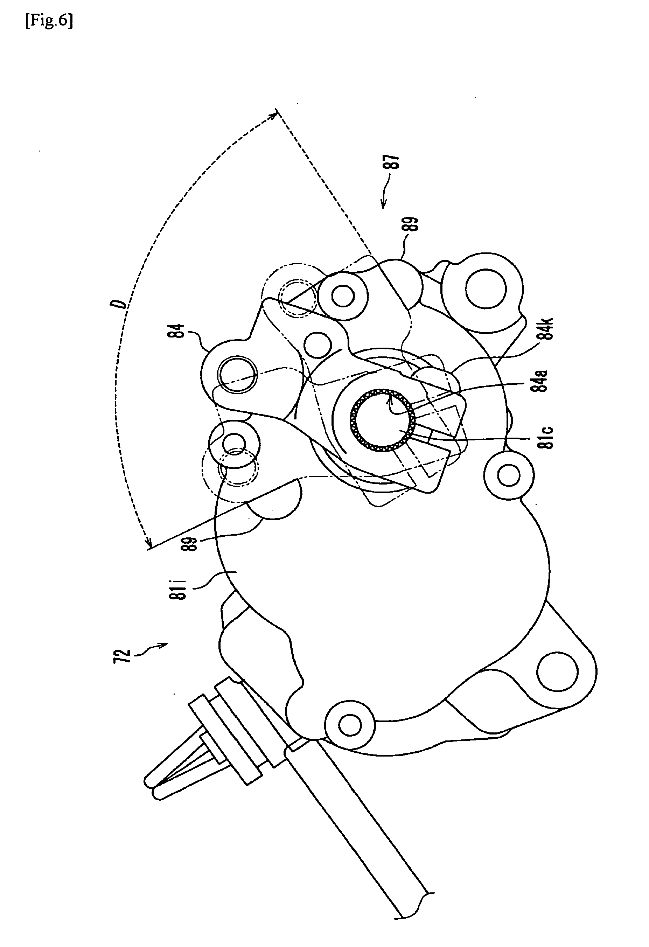

On the other hand, as shown in Fig. 4, an operation lever 84 is fixed to the other end portion of the third shaft 81c. Specifically, as shown in Fig. 6, the operation lever 84 is provided with an engagement hole 84a engaging with the third shaft 81 c, and a serration is formed in each of the engagement hole 84a and the third shaft 81 c. Further, the operation lever 84 is fixed to the third shaft 81 c by engaging the serrations between the operation lever 84 and the third shaft 81 c, and fastening a bolt 81 k. The operation lever 84 can not be relatively rotated with respect to the third shaft 81 c by being fixed as mentioned above. Further, in accordance with this structure, if the third shaft 81 c corresponding to the drive shaft (the output shaft) of the speed reducing mechanism 81 is rotated, the operation lever 84 is oscillated.

Further, stopper members 89 and 89 regulating the oscillation of the operation lever 84 in a predetermined angle range D are attached to the gear case 81i. The stopper members 89 and 89 construct a stopper mechanism 87 together with the operation lever 84. The stopper mechanism 87 regulates such as to prevent the third shaft 81 c from rotating to an angle position which deflects from a detection range of the shift position detector (the angle sensor) S2, by regulating the oscillating angle of the operation lever 84 in the predetermine range D.

Further, as shown in Fig. 4, a shift motor side connection portion 82a of the shift rod 82 is connected to the operation lever 84 by a bolt 82b. The shift motor side connection portion 82a is supported so as to be rotatable with respect to the bolt 82b by a bearing 82c. Accordingly, if the operation lever 84 is oscillated, the shift rod 82 is moved in a longitudinal direction.

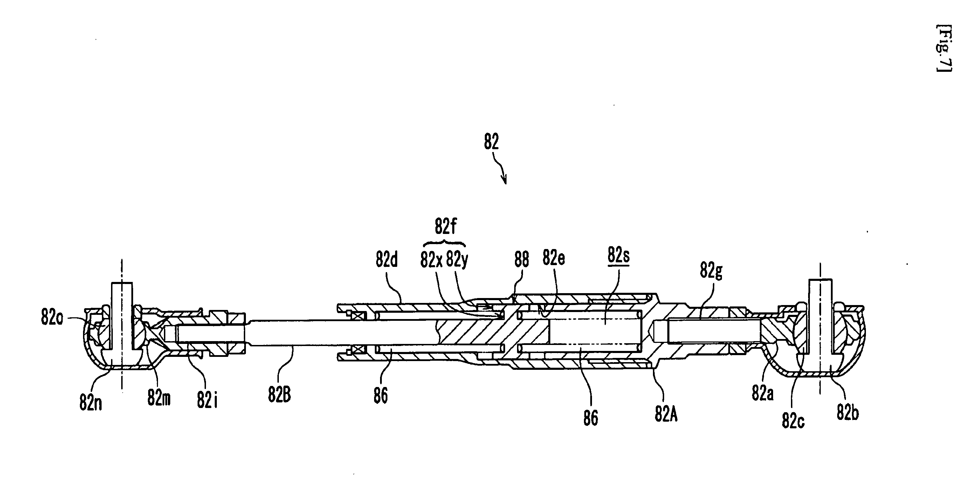

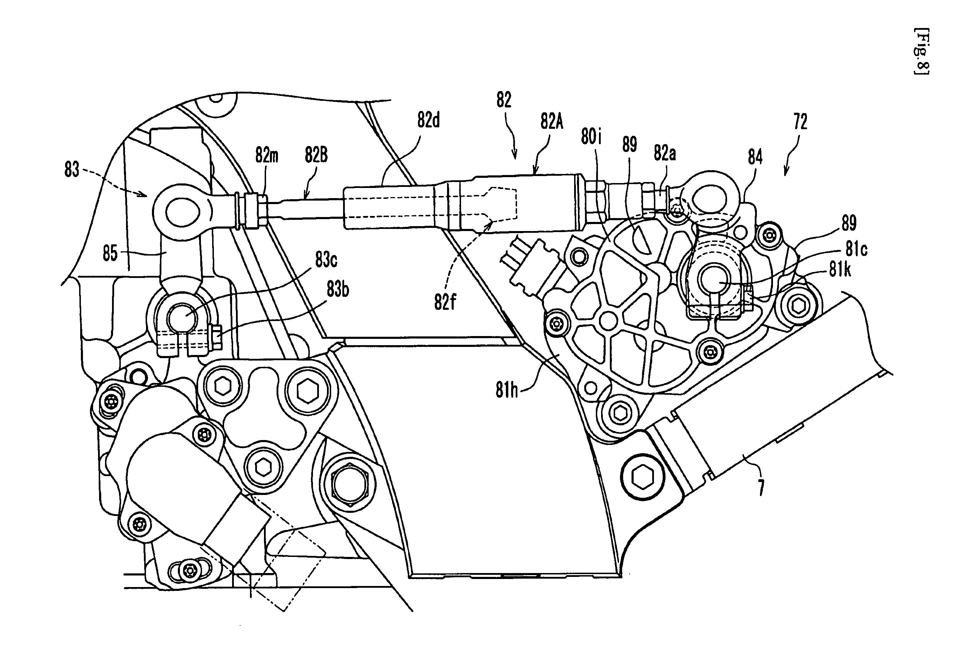

As shown in Fig. 7 or 8, the shift rod 82 is provided with the shift motor side connection portion 82a, a first rod structure portion 82A, a second rod structure portion 82B, and a shift link mechanism side connection portion 82m. A shift link mechanism 83 side of the first rod structure portion 82A is formed by a tubular body 82d. An insertion hole 82s to which the second rod structure portion 82B is inserted is formed in the tubular body 82d. Further, a concave portion 82e is formed in an inner wall surface 82t of the tubular body 82d forming the insertion hole 82s. On the other hand, a power transmission portion 82f protruding to an outer side in a peripheral direction from the second rod structure portion 82B is formed in a shift motor side of the second rod structure portion 82B.

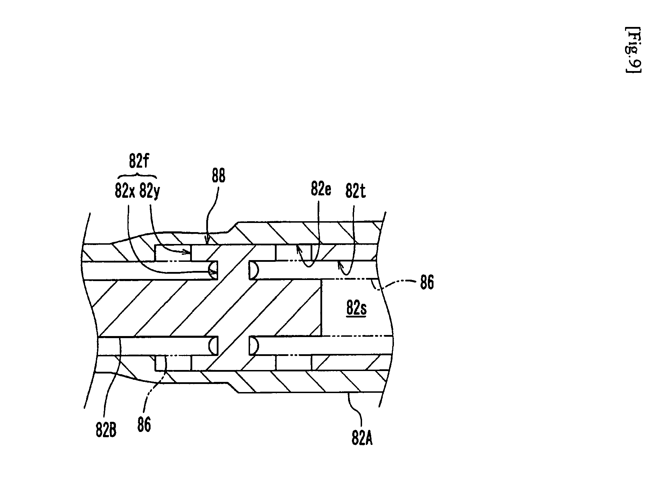

As shown in Fig. 9, in the present embodiment, the power transmission portion 82f has a thin portion 82x and a thick portion 82y, and is formed such that a cross section at a time of cutting in a diametrical direction becomes approximately as a T-shaped form. The second rod structure portion 82B is inserted to the insertion hole 82s of the tubular body 82d in such a manner that the power transmission portion 82f is retained within the concave portion 82e of the first rod structure portion 82A. Further, a coil spring 86 is provided in both sides in an axial direction of the thin portion 82x of the power transmission portion 82f within the insertion hole 82s. The power transmission portion 82f is elastically supported by the coil spring 86.

In this case, although details will be described later, the power transmission portion 82f is engaged with the concave portion 82e of the first rod structure portion 82A so as to transmit the power from the first rod structure portion 82A to the second rod structure portion 82B, in the present embodiment. Further, the thin portion 82x of the power transmission portion 82f is formed in such a manner that if the power transmitted by the power transmission portion 82f becomes larger than a predetermined value T, the thin portion 82x ruptures (deforms) so as to be separated from the second rod structure portion 82B. In this case, in the present embodiment, the power transmission portion 82f constructs a rupture portion which ruptures if the transmission power gets over the predetermined value T. Further, in the present embodiment, the power transmission portion 82f constructs a mechanical fuse (mechanical safety device) 88.

Further, as shown in Figs. 4 and 7, an end portion (a right end in Fig. 4) close to the shift motor 70 of the first rod structure portion 82A is engaged with a thread portion 82g of the shift motor side connection portion 82a. On the other hand, an end portion (a left end in Fig. 4) close to the shift link mechanism of the second rod structure portion 82B is engaged with a thread portion 82i of the shift link mechanism side connection portion 82m. Accordingly, a screwing amount of the thread portion 82g or the thread portion 82i is changed by rotating the first rod structure portion 82A or the second rod structure portion 82B, whereby it is possible to adjust a length of the shift rod 82. As mentioned above, it is possible to easily adjust the length of the shift rod 82 only by rotating the first rod structure portion 82A or the second rod structure portion 82B. Accordingly, a degree of freedom of the arranged position of the shift motor 70 is enlarged. In this case, the structure for changing the length of the shift rod 82 is not limited to the structure shown in Figs. 4 and 7, and it is possible to employ various structures.

As shown in Fig. 4, the shift link mechanism side connection portion 82m of the second rod structure portion 82B is connected to the operation lever 85 by a bolt 82n. The shift link mechanism side connection portion 82m is supported so as to be rotatable with respect to the bolt 82n by a bearing 82o. Accordingly, if the shift rod 82 is moved in the longitudinal direction, the operation lever 85 is oscillated.

Further, the operation lever 85 is fixed to the shift operation shaft 83a of the shift link mechanism 83. Specifically, the operation lever 85 is provided with an engagement hole engaging with the shift operation shaft 83a, and a serration is formed in each of the engagement hole and the shift operation shaft 83a. Further, the operation lever 85 is fixed to the shift operation shaft 83a by engaging the serrations between the operation lever 85 and the shift operation shaft 83a, and fastening the bolt 83b. The operation lever 85 can not be relatively rotated with respect to the shift operation shaft 83a by being fixed as mentioned above. Further, in accordance with this structure, if the operation lever 85 is oscillated, the shift operation shaft 83a is rotated. As mentioned above, the shift rod 82 is attached to the shift link mechanism 83 via the operation lever 85, and is structured such as to be detachable with respect to the shift link mechanism 83.

The shift link mechanism 83 is arranged within the crank case 32, and has the shift operation shaft 83a mentioned above. As mentioned above, the operation lever 85 is fixed to one end portion 83c of the shift operation shaft 83a, and a link lever 83e is attached to the other end portion 83d of the shift operation shaft 83a so as to be relatively non-rotatable. Further, a holder 83f is attached to an inner side than the link lever 83e of the other end portion 83d of the shift operation shaft 83a, and a coil spring 83g is wound around an outer peripheral surface of the holder 83f. Further, a support shaft 83i is attached to an end portion 83h of the link lever 83e. Further, a pawl piece 83k is rotatably attached to the support shaft 83i. An engagement element 83m of the pawl piece 83k is engaged with a pin (not shown) provided in an end portion of a shift cam 421 (see Fig. 3). As mentioned above, the shift link mechanism 83 corresponding to a part of the shift power transmission mechanism 80 is structured such as to be detachable with respect to the shift cam 421 of the gear selecting mechanism 43. In accordance with the structure mentioned above, if the shift operation shaft 83a is rotated, the link lever 83e is oscillated, and the engagement element 83m of the pawl piece 83k pushes the pin (not shown) of the shift cam 421 (see Fig. 3) so as to rotationally drive the shift cam 421. In this case, the coil spring 83g elastically holds the pawl piece 83k at a neutral position.

In accordance with the structure as mentioned above, the shift power transmission mechanism 80 is structured detachably with respect to the gear selecting mechanism 43 and the shift motor 70. Further, the shift link mechanism 83 constructing the shift power transmission mechanism 80 is arranged within the crank case 32, and the speed reducing mechanism 81 and the shift rod 82 are arranged outside of the crank case 32. Further, the shift rod 82 and the speed reducing mechanism 81 which are arranged outside of the crank case 32 are structured detachably with respect to the shift link mechanism 83 arranged within the crank case 32. Further, the power transmission portion 82f serving as the mechanical fuse 88 is provided in the shift rod 82 arranged outside of the crank case 32, in the shift power transmission mechanism 80.

The structures of the gear selecting mechanism 43 and the shift power transmission mechanism 80 are described above. Next, a description will be given of a structure of the automatic transmission control apparatus 50.

As shown in Fig. 10, the automatic transmission control apparatus 50 is structured such as to automatically actuate the clutch mechanism 44 and switch the shift gear of the transmission apparatus 40. The automatic transmission control apparatus 50 is structured such as to include an engine control apparatus 95, a clutch motor 60 driving the clutch mechanism 44, a clutch power transmission mechanism 62 (see Fig. 3) transmitting the power of the clutch motor 60 to the clutch mechanism 44, a shift motor 70 driving the gear selecting mechanism 43 of the transmission apparatus 40, a shift power transmission mechanism 80 transmitting a power of the shift motor 70 to the gear selecting mechanism 43, and the other structure parts (various sensors and the like) necessary for an automatic transmission control (an automated manual transmission).

Next, a description will be given of a system of the automatic transmission control apparatus 50.

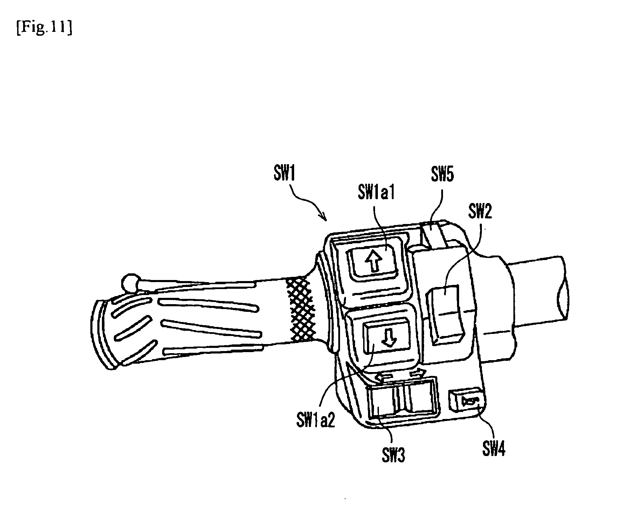

As shown in Fig. 11, for example, a shift switch SW1 is provided in a left grip side of the steering handle 11. The shift switch SW1 is constituted, for example, by a shift up switch SW1a1 and a shift down switch SW1 a2, and is structured such as to appropriately increase or decrease a shift position of the shift gear between a first speed and a highest speed (for example, a sixth speed) on the basis of a manual operation of a driver. Further, the left grip side is provided with a changeover switch SW2, a winker switch SW3, a horn switch SW4, and a light switch SW5. In this case, the changeover switch SW2 is structured such as to switch a gear shift motion to a semi-auto mode or a full-auto mode.

Next, a description will be given of a switching motion of the gear selecting mechanism 43 and the clutch mechanism 44 by the automatic transmission control apparatus 50.

As shown in Fig. 10, the gear selecting mechanism 43 and the clutch mechanism 44 are both switched by the automatic transmission control apparatus 50. In this case, the motorcycle 1 is provided with various sensors such as a clutch position detector of the clutch motor 60 (not shown), a vehicle speed sensor and the like, in addition to the shift position detector S2 of the shift motor 70.

First, since the shift switch SW1 is operated by the driver, the switching of the gear selecting mechanism 43 and the clutch mechanism 44 is started. The engine control apparatus 95 drives the clutch motor 60 and the shift motor 70 on the basis of detection data of the various sensors and a command of the shift switch SW1. Specifically, the engine control apparatus 95 automatically carries out series of shift motions such as a disconnection of the clutch mechanism 44, a switching of the shift gear of the transmission apparatus 40, and a connection of the clutch mechanism 44, on the basis of a predetermined program previously stored within the engine control apparatus 95 and the other computing circuits. A description will be in detail given below of the series of shift motions.

A description will be first given of the disconnecting motion of the clutch mechanism 44.

First, the engine control apparatus 95 rotationally drives the clutch motor 60 on the basis of the command of the shift switch SW1. Further, an output shaft 60g is moved in a leftward direction in Fig. 3. Accordingly, a piston 60l of a cylinder 60k is pushed in a leftward direction in Fig. 3, and an oil existing within an oil chamber 60n is fed to a space 467 surrounded by a cylinder main body 465 and a piston 463 through an oil hose 60q. If the oil is fed to the space 467, the piston 463 is moved in a rightward direction in Fig. 3. In this case, a reservoir tank 60t is communicated with the oil chamber 60n via a reservoir hose 60s (see Fig. 2).

A pressure plate 451 is pushed in the rightward direction in Fig. 3 via a push rod 461, a ball 459, a push rod 455 and a deep groove ball bearing 457, on the basis of the movement in the rightward direction of the piston 463. If the force at a time of being pushed becomes larger than a force which the spring 450 biases the pressure plate 451 in the leftward direction in Fig. 3, the pressure plate 451 is moved in the rightward direction in Fig. 3. Further, a pressing portion 451 B of the pressure plate 451 is disconnected from a friction disc 445. Accordingly, a pressure connection between each of the friction discs 445 and each of the clutch plates 449 is canceled, and a friction force capable of transmitting the torque is not generated between each of the friction discs 445 and each of the clutch plates 449. The clutch mechanism 44 is disconnected in the manner as mentioned above, and comes to a non-connected state.

As mentioned above, if the clutch mechanism 44 is disconnected, the switching motion of the shift gear of the transmission apparatus 40 is next carried out. A description will be given below of the switching motion of the shift gear.

If the clutch mechanism 44 is disconnected, the engine control apparatus 95 rotationally drives the shift motor 70 while keeping the non-connected state of the clutch mechanism 44. Accordingly, the gear 70d of the motor shaft 70a is rotated. As shown in Fig. 4, the first speed reducing gear 81e, the first shaft 81a, the gear 81s, the second speed reducing gear 81f, the second shaft 81b, the gear 81t and the third speed reducing gear 81g are rotated alphabetically in an interlocking manner, on the basis of the rotation of the gear 70d. Therefore, the third shaft 81 c corresponding to the drive shaft (the output shaft) of the speed reducing mechanism 81 is rotated.

In this case, as shown in Fig. 4, the shift position detector S2 is attached to an end portion of the third shaft 81c. The shift position detector S2 determines position information on the basis of the rotation of the third shaft 81 c, and transmits the position information to the engine control apparatus 95. The engine control apparatus 95 controls the shift motor 70 on the basis of the position information mentioned above.

If the third shaft 81 c is rotated, the operation lever 84 is oscillated, and if the operation lever 84 is oscillated, the shift rod 82 is moved in the longitudinal direction. Further, if the shift rod 82 is moved, the operation lever 85 is oscillated, and if the operation lever 85 is oscillated, the shift operation shaft 83a is rotated. Further, if the shift operation shaft 83a is rotated, the link lever 83e is oscillated, and the shift cam 421 is rotated at a predetermined angle via the engagement element 83m of the pawl piece 83k.

As shown in Fig. 3, if the shift cam 421 is rotated, the shift fork 422 is moved in the axial direction at a predetermined amount in accordance with the cam groove 421 a. On the basis of the motion of the shift fork 422 as mentioned above, a pair of shift gears 49 and 420 are alphabetically fixed to the main shaft 41 and the drive shaft 42. On the basis of the motion mentioned above, the predetermined shift gear pair transmitting the power is selected, and switched. Accordingly, the rotational driving force transmitted to the main shaft 41 is transmitted to the drive shaft 42 at a predetermined speed reducing ratio.

In the meanwhile, there is a case that the transmission apparatus 40 is not actuated for the reason why the shift gears 49 and 420 are not smoothly engaged and disengaged, and the shift power transmission mechanism 80 can not transmit the torque to the transmission apparatus 40 in spite that the shift motor 70 operates. In the case mentioned above, an excessive torque is generated in the shift power transmission mechanism 80, and the shift motor 70 comes to an overload state.

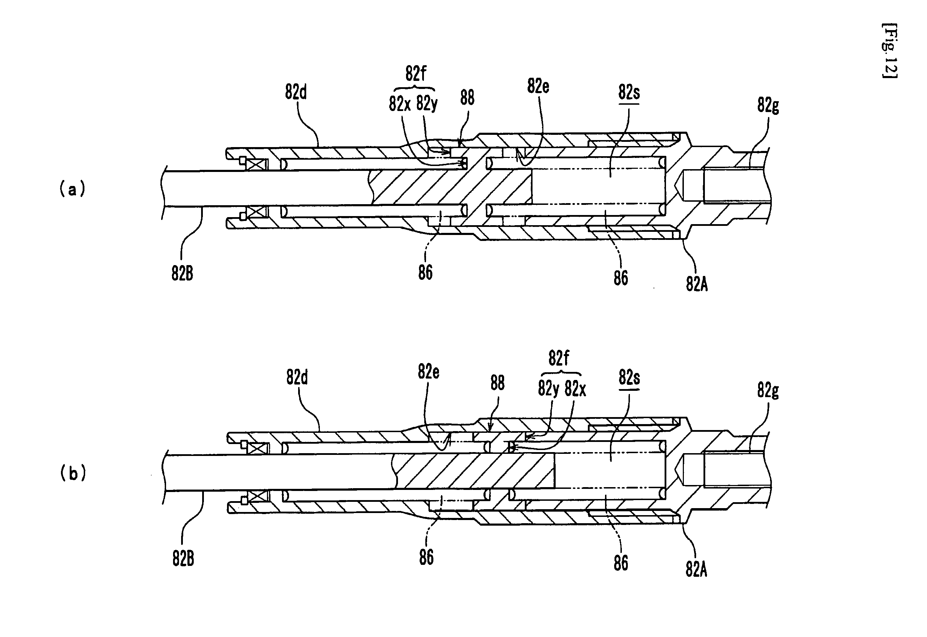

However, the automatic transmission control apparatus 50 of the present motorcycle 1 is provided with the power transmission portion 82f serving as the mechanical fuse 88. Accordingly, it is possible to inhibit the shift motor 70 as mentioned above from coming to the overload state. Specifically, as shown in Figs. 12(a) and 12(b), if the power which the power transmission portion 82f of the shift power transmission mechanism 80 transmits gets over the predetermined value T, the thin portion 82x of the power transmission portion 82f ruptures, and the power transmission portion 82f is disconnected from the second rod structure portion 82B (see Fig. 12(b)). Accordingly, the power applied to the shift power transmission mechanism 80 is lightened, and it is possible to suppress the load applied to the shift motor 70.

In this case, the predetermined value T means a magnitude of the transmission power which is set such as to prevent the shift motor 70 from coming to the overload. In the present embodiment, the predetermined value T is set to a limit value of the power which the shift power transmission mechanism 80 can transmit without making the shift motor 70 in the overload state. In this case, the predetermined value T can be optionally set, and may be set to a smaller value than the limit value mentioned above.

As mentioned above, even in the case that the transmission apparatus 40 is not actuated for some reason, the power transmitted by the shift power transmission mechanism 80 is limited to the predetermined value T or less by the mechanical fuse 88. Accordingly, it is possible to limit the load of the shift motor 70, and it is possible to inhibit the shift motor 70 from coming to the overload state. Further, since the force applied to the shift gears 49 and 420 is limited to the predetermined force or less in accordance with this structure, it is possible to prevent the shift motion from being stopped due to the excessive force applied to the shift gears 49 and 420. Therefore, the shift gears 49 and 420 are finally engaged and disengaged so as to be fixed to the main shaft 41 and the drive shaft 42, and the shift motion is finished.

In this case, in the present embodiment, the second rod structure portion 82B is inserted to the insertion hole 82s of the tubular body 82d in such a manner that the power transmission portion 82f is retained within the concave portion 82e of the first rod structure portion 82A. Accordingly, when the thin portion 82x of the power transmission portion 82f ruptures, and the power transmission portion 82f is disconnected from the second rod structure portion 82B, the disconnected power transmission portion 82f is accommodated within the concave portion 82e of the first rod structure portion 82A (see Fig. 12(b)).

After the shift gear is switched in the manner mentioned above, the clutch mechanism 44 is changed from the non-connected state to the connected state. A description will be given below of a connecting motion of the clutch mechanism 44.

If the switching of the shift gear is finished, the engine control apparatus 95 rotationally drives the clutch motor 60 in the reverse direction. In accordance with this, the output shaft 60g of the clutch motor 60 is moved little by little in the rightward direction in Fig. 3, and the piston 60l is moved in the rightward direction in Fig. 3 after the fashion of the output shaft 60g. On the basis of the movement of the piston 60l, a working fluid flows in the oil chamber 60n from the space 467 surrounded by the cylinder main body 465 and the piston 463 through the oil hose 60q.

Further, on the basis of the movement of the working fluid mentioned above, the piston 463 biased by the pressure plate 451 and the spring 450 is moved little by little in the leftward direction in Fig. 3. In accordance with this, the pressure plate 451 is moved little by little in the leftward direction in Fig. 3. The pressing portion 451B of the pressure plate 451 is finally brought into contact with the friction disc 445, and presses the friction disc 445 in the leftward direction in Fig. 3. Accordingly, each of the friction discs 445 and each of the clutch plates 449 are pinched by the pressing portion 447B of the clutch boss 447 and the pressing portion 451B of the pressure plate 451, and a friction force is generated between each of the friction discs 445 and each of the clutch plates 449. Further, if the pressure plate 451 is further moved in the leftward direction in Fig. 3, the friction force generated between the friction disc 445 and the clutch plate 449 becomes large on the basis of the biasing force of the spring 450. As a result, a slip is hardly generated between the friction disc 445 and the clutch plate 449, and a friction force capable of transmitting the torque from the clutch housing 443 to the clutch boss 447 is generated between the friction disc 445 and the clutch plate 449. In the manner mentioned above, the clutch mechanism 44 is connected and comes to a connected state.

As mentioned above, the automatic transmission control apparatus 50 in accordance with the present embodiment is provided with the mechanical fuse 88 generating an irreversible state change (the rupture in the present embodiment) in such a manner that if the transmission power gets over the predetermined value, the transmission power becomes the predetermined value or less. In other words, the automatic transmission control apparatus 50 is provided with the mechanical fuse 88 which generates the irreversible state change (the rupture in the present embodiment) if the shift motor 70 comes to the overload state, and shuts off the transmission of the power from the shift motor 70 to the gear selecting mechanism 43. Accordingly, since the transmission of the power from the shift motor 70 to the gear selecting mechanism 43 is shut off even if the shift motor 70 comes to the overload state for some reason, it is possible to suppress the overload of the shift motor 70. Further, the automatic transmission control apparatus 50 in accordance with the present embodiment neither suppresses the torque of the shift motor itself nor uses the torque limiter constructed by the elastic member having the small elastic coefficient or the like, for suppressing the overload applied to the shift motor 70. Accordingly, it is possible to shorten the time after starting the shift motion until the shift motion is finished. Therefore, on the basis of the automatic transmission control apparatus 50 in accordance with the present embodiment, it is possible to achieve both the suppression of the overload of the shift motor 70 and the shortening the time of the shift motion.

In the meanwhile, the mechanical fuse 88 functions only one time, and does not function plural times. In other words, since the mechanical fuse 88 reduces the transmission power on the basis of the irreversible state change, the mechanical fuse 88 can not transmit the power of the shift motor 70 to the gear selecting mechanism 43 once the mechanical fuse 88 functions, whereby the mechanical fuse 88 comes to the state in which the shift motion can not be carried out.

However, the mechanical fuse 88 functions only in the special state in which the overload is generated in the shift motor 70, and a frequency thereof is low. Further, in the present embodiment, the mechanical fuse 88 is provided in the detachable shift power transmission mechanism 80.

Therefore, in accordance with the present automatic transmission control apparatus 50, the mechanical fuse 88 can be easily replaced by replacing the detachable shift power transmission mechanism 80. Accordingly, even if the mechanical fuse 88 functions and the shift motion can not be carried out, it is possible to immediately restore to the state in which the shift motion can be carried out, by replacing the shift power transmission mechanism 80. Therefore, in accordance with the present automatic transmission control apparatus 50, it is possible to maintain the effect mentioned above, that is, the suppression of the overload applied to the shift motor 70 and the shortening of the time after starting the shift motion until the shift motion is finished.

In this case, the rotating or sliding member such as the engine, the clutch mechanism 44 or the like is stored within the crank case 32. Further, the crank case 32 is filled with the oil for lubricating these members. Therefore, it is troublesome to replace the members within the crank case 32.

However, in the present power unit 20, the mechanical fuse 88 is provided within the shift rod 82 arranged outside of the crank case 32 in the shift power transmission mechanism 80. Further, the shift rod 82 is detachably mounted to the shift link mechanism 83 arranged within the crank case 32 in the shift power transmission mechanism 80, via the operation lever 85. Accordingly, in the case that the mechanical fuse 88 functions, it is possible to easily replace the shift rod 82 including the mechanical fuse 88 without disassembling the crank case 32. Therefore, in accordance with the automatic transmission control apparatus 50 of the present power unit 20, even if the mechanical fuse 88 functions, it is possible to immediately restore to the state in which the shift motion can be carried out, by replacing the shift rod 82, and it is possible to maintain the effect mentioned above, that is, the suppression of the overload applied to the shift motor 70 and the shortening of the time after starting the shift motion until the shift motion is finished.

Further, in the present embodiment, the power transmission portion 82f is fixed to the second rod structure portion 82B of the shift rod 82. The power transmission portion 82f is engaged with the first rod structure portion 82A so as to transmit the power from the first rod structure portion 82A to the second rod structure portion 82B. Further, the power transmission portion 82f is formed such that if the transmitted power becomes larger than the predetermined value T, the power transmission portion 82f generates the irreversible state change (ruptures in the present embodiment) so as to be disconnected from the second rod structure portion 82B.

In this case, the fixing means being attached so as to be relatively immovable with respect to the power transmitting direction (the longitudinal direction of the shift rod 82 in the present embodiment). Accordingly, the power transmission portion may be independently formed and attached by welding or the like so as to be immovable in the power transmitting direction, or may be integrally formed.

On the basis of the power transmission portion 82f, the mechanical fuse 88 can be structured simply. Further, in accordance with the present power unit 20, in the case that the mechanical fuse 88 functions, it is possible to repair such that the shift power transmission mechanism 80 serves (transmits the power), at least by refixing the power transmission portion 82f to the second rod structure portion 82B or replacing the second rod structure portion 82B. Therefore, in accordance with the present power unit 20, it is possible to restrict a number of the parts necessary for being replaced due to the function of the mechanical fuse 88. Accordingly, it is possible to suppress a cost caused by the function of the mechanical fuse 88.

Further, in the present power unit 20, the power transmission portion 82f is retained within the concave portion 82e of the first rod structure portion 82A. Accordingly, even if the power which the power transmission portion 82f transmits becomes larger than the predetermined value T and the power transmission portion 82f is separated from the second rod structure portion 82B, the power transmission portion 82f is accommodated within the concave portion 82e of the first rod structure portion 82A. Therefore, it is possible to prevent the separated power transmission portion 82f from being energetically disconnected from the second rod structure portion 82B, and being interfered with the other member.

Further, in accordance with the present motorcycle 1, since the motorcycle 1 is provided with the power unit 20 having the mechanical fuse 88, it is possible to provide the straddle-type vehicle which can shorten the time after starting the shift motion until the shift motion is finished, while suppressing the overload applied to the shift motor 70.

### Modified Embodiment 1

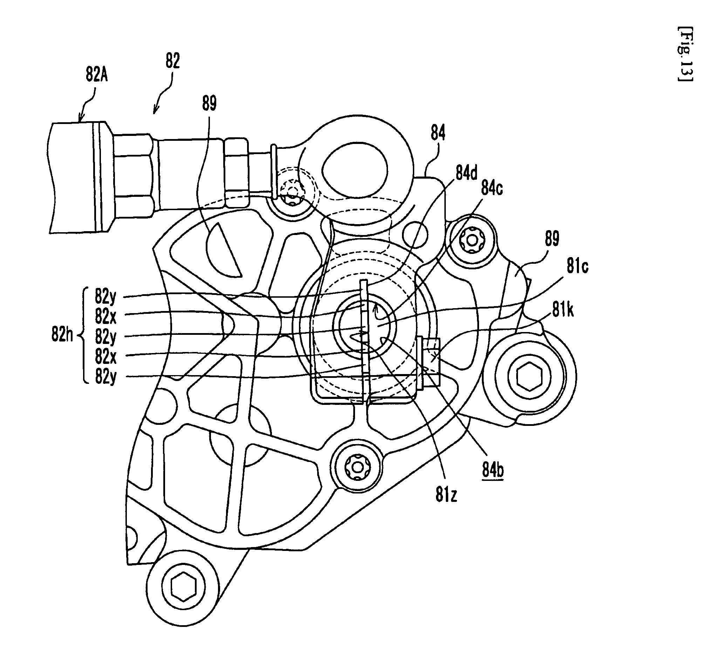

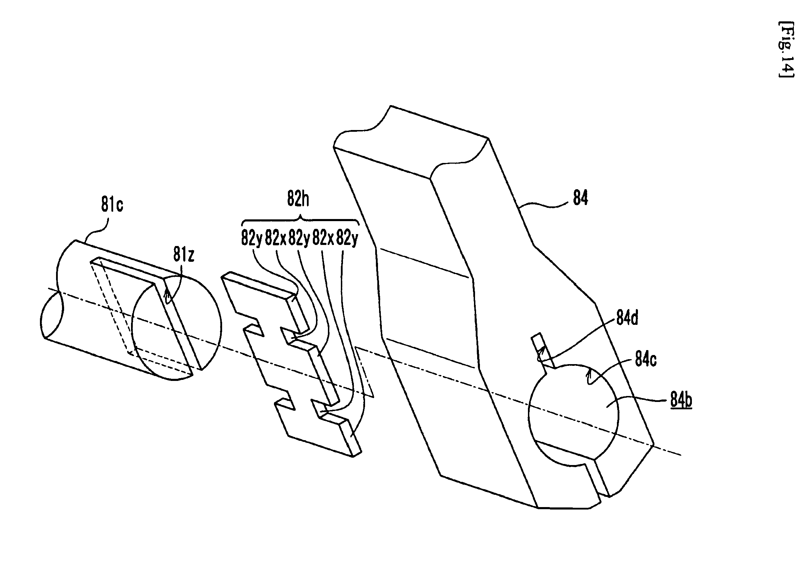

In this case, in the present embodiment, the mechanical fuse (mechanical safety device) 88 is constituted by the power transmission portion 82f transmitting the power from the first rod structure portion 82A to the second rod structure portion 82B. However, the mechanical fuse 88 is not limited to the power transmission portion 82f transmitting the power from the first rod structure portion 82A to the second rod structure portion 82B. For example, as shown in Figs. 13 and 14, the mechanical fuse 88 may be constituted by a power transmission portion 82h transmitting the power from the third shaft 81 c constructing the drive shaft (the output shaft) of the speed reducing mechanism 81 to the operation lever 84.

Specifically, the power transmission portion 82h is constituted by a plate-like body having three thick portions 82y and two thin portions 82x formed between the thick portions 82y. The power transmission portion 82h is inserted to a notch portion 81 z formed in the end portion of the third shaft 81 c. Accordingly, the power transmission portion 82h is attached to the third shift 81 c so as to be relatively non-rotatable.

Further, an insertion hole 84b to which the third shaft 81 c is inserted is formed in the operation lever 84. Further, a concave portion 84d is formed in an inner wall surface 84c of the operation lever 84 forming the insertion hole 84b. Further, the third shaft 81 c to which the power transmission portion 82h is attached is inserted to the insertion hole 84b of the operation lever 84, the bolt 81 k is fastened, and the operation lever 84 is fixed to the third shaft 81 c and the power transmission portion 82h. At this time, the third shaft 81 c is inserted to the insertion hole 84b in such a manner that the thick portions 82y existing in both ends of the power transmission portion 82h are retained to the concave portion 84d. Accordingly, the operation lever 84 becomes relatively non-rotatable with respect to the third shaft 81 c and the power transmission portion 82h. In accordance with the structure mentioned above, if the third shaft 81 c corresponding to the drive shaft (the output shaft) of the speed reducing mechanism 81 is rotated, the power from the third shaft 81 c is transmitted to the operation lever 84 by the power transmission portion 82h, and the operation lever 84 is oscillated.

In this case, as shown in Fig. 13, the power transmission portion 82h is formed in such a manner that two thin portions 82x are positioned in the end portions in the diametrical direction of the third shaft 81 c within the notch portion 81z of the third shaft 81 c. Further, the thin portion 82x of the power transmission portion 82h is formed in such a manner as to rupture if the power (the rotating force in the modified embodiment 1) transmitted by the power transmission portion 82h becomes larger than the predetermined value T, and two thick portions 82y existing in the outer side in the diametrical direction than the thin portion 82x are formed in such a manner as to be disconnected from the third shaft 81 c.

As mentioned above, even in the case that the mechanical fuse 88 is constituted by the power transmission portion 82h transmitting the power from the third shaft 81 c constructing the drive shaft (the output shaft) of the speed reducing mechanism 81 to the operation lever 84, the thin portion 82x of the power transmission portion 82h ruptures (deforms) if the shift motor 70 comes to the overload, whereby the transmission of the power is shut off. Accordingly, since the transmission of the power is shut off even if the shift motor 70 comes to the overload state for some reason, it is possible to suppress the overload of the shift motor 70. Further, even in the case that the mechanical fuse 88 is structured as mentioned above, the torque of the shift motor itself is not suppressed for suppressing the overload applied to the shift motor 70, and the torque limiter constituted by the elastic member having the small elastic coefficient or the like is not used. Accordingly, it is possible to shorten the time after starting the shift motion until the shift motion is finished. Therefore, even on the basis of the automatic transmission control apparatus 50 in accordance with the present modified embodiment 1, it is possible to achieve both the suppression of the overload of the shift motor 70 and the shortening of the time of the shift motion.

Further, the mechanical fuse 88 can be simply structured even by the power transmission portion 82h of the present modified embodiment 1. Further, in accordance with the power unit 20 of the present modified embodiment 1, in the case that the mechanical fuse 88 functions, it is possible to repair in such a manner that the shift power transmission mechanism 80 functions (transmits the power), at least by refixing the power transmission portion 82h to the notch portion 81z of the third shaft 81 c or replacing the third shaft 81 c. Therefore, in accordance with the present power unit 20, it is possible to restrict the number of the parts which are necessary for being replaced by the function of the mechanical fuse 88. Accordingly, it is possible to suppress the cost caused by the function of the mechanical fuse 88.

Further, in the present modified embodiment 1, the power transmission portion 82h is retained within the concave portion 84d of the operation lever 84. Accordingly, even if the power transmitted by the power transmission portion 82h becomes larger than the predetermined value T and two thick portions 82y of the power transmission portion 82h are detached from the third shaft 81 c, two thick portions 82y of the power transmission portion 82h are accommodated within the concave portion 84d of the operation lever 84. Therefore, even in the present embodiment, it is possible to prevent the interference of the other member by two detached thick portions 82y of the power transmission portion 82h.

### Modified Embodiment 2

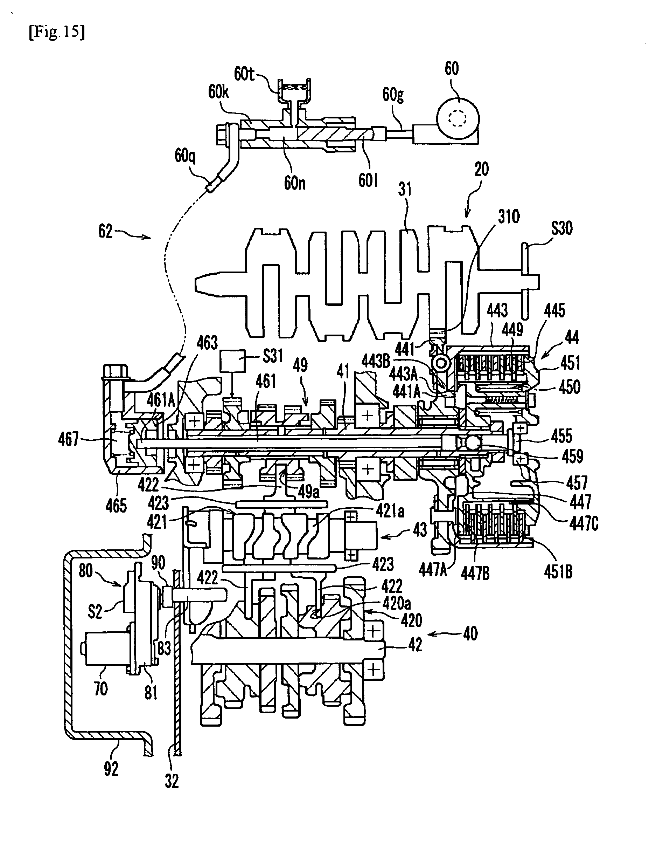

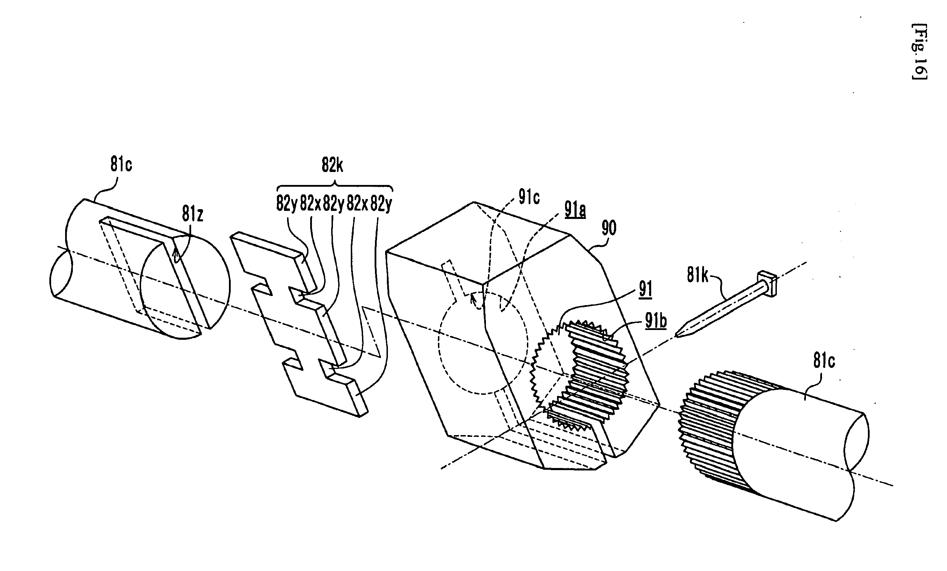

As shown in Fig. 3, in the embodiment mentioned above, the shift power transmission mechanism 80 is provided with the speed reducing mechanism 81 reducing the rotational speed of the shift motor 70, the operation lever 84, the shift rod 82, the operation lever 85, and the shift link mechanism 83. However, the structure of the shift power transmission mechanism 80 is not limited to this. As shown in Fig. 15, the shift power transmission mechanism 80 may be constituted by the speed reducing mechanism 81, the shift link mechanism 83, and a coupling member 90 connecting the speed reducing mechanism 81 and the shift link mechanism 83. The coupling member 90 may be structured, for example, as shown in Fig. 16, by an element which coaxially couples the third shaft 81 c of the speed reducing mechanism 81 and the shift operation shaft 83a of the shift link mechanism 83 so as to be relatively non-rotatable.

As shown in Fig. 16, an engagement hole 91 extending from one side toward the other side is formed in the coupling member 90 in accordance with the present modified embodiment 2. The engagement hole 91 is formed by a hole 91 a in one side and a hole 91 b in the other side which have different shapes. The hole 91 a is formed as the same shape as the insertion hole 84b formed in the operation lever 84 in the modified embodiment 1. A concave portion 91 d is provided in an inner wall surface 91 c forming the hole 91 a. On the other hand, the hole 91 b is formed as the same shape as the engagement hole 84a of the operation lever 84 in accordance with the embodiment mentioned above, and a serration is formed in the hole 91 b.

Further, in the present modified embodiment 2, the mechanical fuse (mechanical safety device) 88 is structured by a power transmission portion 82k which is the same as the power transmission portion 82h in accordance with the modified embodiment 1. The power transmission portion 82k is structured such as to transmit the power from the third shaft 81 c constructing the drive shaft (the output shaft) of the speed reducing mechanism 81 to the coupling member 90.

Specifically, the power transmission portion 82k is constituted by a plate-shaped body having three thick portions 82y and two thin portions 82x formed between the thick portions 82y, in the same manner as the power transmission portion 82h in accordance with the modified embodiment 1. The power transmission portion 82k is inserted to the notch portion 81z formed in the end portion of the third shaft 81c. Accordingly, the power transmission portion 82k is attached to the third shaft 81 c so as to be relatively non-rotatable.

Further, the third shaft 81 c to which the power transmission portion 82k is attached is inserted to the hole 91 a in one side of the coupling member 90. At this time, the third shaft 81 c is inserted to the insertion hole 84b in such a manner that the thick portions 82y existing in both ends of the power transmission portion 82k are retained to the concave portion 91 d. On the other hand, the shift operation shaft 83a of the shift link mechanism 83 is inserted to the hole 91 b in the other side of the coupling member 90 in such a manner that the serrations are engaged with each other. Further, the third shaft 81 c and the power transmission portion 82k, and the shift operation shaft 83a are fixed to the coupling member 90 so as to be relatively non-rotatable, by fastening the bolt 81 k. In accordance with the structure mentioned above, if the third shaft 81 c corresponding to the drive shaft (the output shaft) of the speed reducing mechanism 81 is rotated, the power from the third shaft 81c is transmitted to the coupling member 90 by the power transmission portion 82k, and the coupling member 90 is rotated. Further, the shift operation shaft 83a is rotated in accordance with the rotation of the coupling member 90.

Even in the case structured as mentioned above, in the same manner as the modified embodiment 1, since the thin portion 82x of the power transmission portion 82k ruptures (deforms) if the shift motor 70 comes to the overload, the transmission of the power by the shift power transmission mechanism 80 is shut off. Accordingly, even if the shift motor 70 comes to the overload state for some reason, the transmission of the power by the shift power transmission mechanism 80 is shut off. Therefore, it is possible to suppress the overload of the shift motor 70. Further, since the torque of the shift motor itself is not restricted for suppressing the overload applied to the shift motor 70, and the torque limiter constructed by the elastic member having the small elastic coefficient or the like is not used, it is possible to shorten the time after starting the shift motion until the shift motion is finished. Therefore, even on the basis of the automatic transmission control apparatus 50 in accordance with the present modified embodiment 2, it is possible to achieve both the suppression of the overload of the shift motor 70 and the shortening of the time of the shift motion.

Further, in the present modified embodiment 2, as shown in Fig. 15, the shift motor 70, the speed reducing mechanism 81 and the coupling member 90 are covered by a cover 92. The speed reducing mechanism 81 constructs a part of the shift power transmission mechanism 80. The mechanical fuse 88 (the power transmission portion 82k) is fixed to the coupling member 90. However, the shift motor 70, the speed reducing mechanism 81 constructing a part of the shift power transmission mechanism 80 and the coupling member 90 are arranged outside of the crank case 32. Further, the speed reducing mechanism 81 and the coupling member 90 are structured such as to be detachable with respect to the shift link mechanism 83 arranged within the crank case 32.

Even in the present modified embodiment 2, if the mechanical fuse 88 functions, the shift motion can not be carried out. Accordingly, it is necessary to replace the power transmission portion 82k, and it is necessary to detach the coupling member 90 and the third shaft 81 c at a time of replacing. In the meanwhile, the coupling member 90 and the third shaft 81 c are covered by the cover 92. However, the coupling member 90 and the third shaft 81 c are arranged outside of the crank case 32. Accordingly, since the coupling member 90 and the third shaft 81c do not exist within the crank case 32 filled with the oil, it is possible to replace without disassembling the crank case 32 only by detaching the cover 92. Therefore, even in the present modified embodiment 2, in the case that the mechanical fuse 88 functions, it is possible to easily replace the power transmission portion 82k corresponding to the mechanical fuse 88 without disassembling the crank case 32 filled with the oil. Accordingly, even in the present modified embodiment 2, it is possible to immediately restore to the state in which the shift motion can be carried out, even if the mechanical fuse 88 functions. Therefore, it is possible to maintain the effect mentioned above, that is, the suppression of the overload applied to the shift motor 70 and the shortening of the time after starting the shift motion until the shift motion is finished.

In this case, in the embodiment and the modified embodiments, the description is given of the example in which the shift power transmission mechanism 80 is provided with the mechanical fuse 88 which ruptures if the transmission power gets over the predetermined value T, however, the mechanical fuse 88 is not limited to this. For example, the shift power transmission mechanism 80 may be provided with a mechanical fuse 88 having a plastic deforming portion which is plastically deformed if the transmission power gets over the predetermined value T. Also, a combination of rupture and plastic deformation may be possible.

In the case mentioned above, if the shift motor 70 comes to the overload state for some reason, the transmission of the power from the shift motor 70 to the gear selecting mechanism 43 is reduced by the plastic deformation of the plastic deforming portion. Accordingly, it is possible to suppress the overload of the shift motor 70. Further, since the torque of the shift motor itself is not suppressed for suppressing the overload applied to the shift motor 70, and the torque limiter constructed by the elastic member having the small elastic coefficient or the like is not used, in the same manner as the embodiment and the modified embodiments mentioned above, it is possible to shorten the time after starting the shift motion until the shift motion is finished. Therefore, even in the automatic transmission control apparatus 50 provided with the mechanical fuse 88 having the plastic deforming portion, it is possible to achieve both the suppression of the overload of the shift motor 70 and the shortening of the time of the shift motion.

Further, the mechanical fuse 88 may be structured such as to have an input member to which the transmission power is input, and an output member which is engaged with the input member so as to output the power from the input member. Specifically, in the case that the transmission power is equal to or less than the predetermined value T, the input member and the output member are in an engaged state, and the power is transmitted from the input member to the output member. On the other hand, if the transmission power gets over the predetermined value T, the engagement between the input member and the output member is canceled, and the transmission of the power from the input member to the output member is shut off.

In the case mentioned above, if the shift motor 70 comes to the overload state for some reason, the transmission of the power from the shift motor 70 to the gear selecting mechanism 43 is shut off on the basis of the cancellation of the engagement between the input member and the output member of the mechanical fuse 88. Therefore, it is possible to suppress the overload of the shift motor 70. Further, since the overload of the shift motor 70 is suppressed by neither suppression of the torque of the shift motor itself nor using the torque limiter constructed by the elastic member having the small elastic coefficient or the like, in the same manner as the embodiment and the modified embodiments mentioned above, it is possible to shorten the time after starting the shift motion until the shift motion is finished. Accordingly, even in the automatic transmission control apparatus 50 provided with the mechanical fuse 88 mentioned above, it is possible to achieve both the suppression of the overload of the shift motor 70 and the shortening of the time of the shift motion.

The term "irreversible state change" includes a plastic deformation and the like in addition to the rupture. Further, the term "irreversible state change" may be constituted by a state change in which the engagement between the members to be engaged is canceled.

As mentioned above, the present teaching is useful for the automatic transmission control apparatus which automatically carries out the shift gear change of the transmission apparatus, the power unit provided with the automatic transmission control apparatus, and the straddle-type vehicle provided with the automatic transmission control apparatus.

The description above discloses (among others) an embodiment of an automatic transmission control apparatus comprising: a transmission apparatus having a plurality of shift gear pairs having different transmission gear ratios from each other, and a gear selecting mechanism selecting the shift gear pair transmitting a power among said plurality of shift gear pairs; a shift actuator generating a power driving said gear selecting mechanism; a shift power transmission mechanism transmitting the power of said shift actuator to said gear selecting mechanism; and a mechanical fuse provided within said shift power transmission mechanism and generating an irreversible state change such that a transmission power becomes equal to or less than a predetermined value if said transmission power gets over the predetermined value.

Preferably, at least a part including said mechanical fuse in said shift power transmission mechanism is structured detachable.

Preferably, said mechanical fuse is provided with a rupture portion rupturing as said irreversible state change.

Further, preferably a power unit comprises: the automatic transmission control apparatus as mentioned in one of the embodiments before with an engine; and a casing storing at least said engine, wherein said shift power transmission mechanism has at least a first transmission mechanism portion and a second transmission mechanism portion, wherein said first transmission mechanism portion is positioned within said casing, wherein said second transmission mechanism portion is positioned out of said casing, and is structured such as to be detachable with respect to said first transmission mechanism portion, and wherein said mechanical fuse is provided within said second transmission mechanism portion.

Preferably, said second transmission mechanism portion has a first member, and said second member provided closer to said gear selecting mechanism side than said first member, wherein said mechanical fuse is fixed to said second member between said first member and said second member, and has a power transmission portion engaging with said first member so as to transmit the power from said first member to said second member, and wherein said power transmission portion is detached from said second member if said transmitted power becomes larger than a predetermined value.

Preferably, an insertion hole to which said second member is inserted is formed in said first member, wherein a concave portion is formed in an inner wall surface of said first member forming said insertion hole, and wherein said power transmission portion is retained in said concave portion.

Preferably, said second transmission mechanism portion has a first member, and said second member provided closer to said gear selecting mechanism side than said first member, wherein said mechanical fuse is fixed to said first member between said first member and said second member, and has a power transmission portion engaging with said second member so as to transmit the power from said first member to said second member, and wherein said power transmission portion is detached from said first member if said transmitted power becomes larger than a predetermined value.

Preferably, an insertion hole to which said first member is inserted is formed in said second member, wherein a concave portion is formed in an inner wall surface of said second member forming said insertion hole, and said power transmission portion is retained in said concave portion.

Preferably, a straddle-type vehicle is provided with the power unit as mentioned in one of the embodiments before.

In order to provide an automatic transmission control apparatus which can shorten a time after starting a shift motion until the shift motion is finished, while suppressing an overload applied to a shift actuator, the following is suggested:
An automatic transmission apparatus is provided with a transmission apparatus having a plurality of shift gear pairs having different transmission gear ratios, and a gear selecting mechanism selecting the shift gear pair transmitting a power, a shift motor 70 driving the gear selecting mechanism, and a shift power transmission mechanism 80 transmitting a power of the motor 70 to the gear selecting mechanism. Further, the automatic transmission control apparatus is provided with a mechanical fuse 88 provided within the shift power transmission mechanism 80 and generating an irreversible state change such that the transmission power becomes equal to or less than a predetermined value T if the transmission power gets over the predetermined value T.

## Claims

1. Automatic transmission control apparatus comprising:
a gear selecting mechanism (43) configured to select a shift gear pair (49,420) of a transmission apparatus (40) for transmitting driving power from an input to an output of the transmission apparatus (40);
a shift actuator (70) configured to generate power to drive said gear selecting mechanism (43);
a shift power transmission mechanism (80) configured to transmit the power of said shift actuator (70) to said gear selecting mechanism (43); and
**characterized by**
a mechanical safety device (88) configured to accomplish an irreversible state change in which a transmission power of the shift power transmission mechanism (80) becomes equal to or less than a predetermined value (T) if said transmission power exceeds the predetermined value (T),
wherein the mechanical safety device (88) has at least one power transmission portion (82f,82h,82k) with at least a thin portion (82x) and a thick portion (82y), the thin portion (82x) being thinner than the thick portion (82y) and being configured to plastically deform and/or rupture if the transmission power exceeds the predetermined value (T).

2. Automatic transmission control apparatus according to claim 1, wherein the mechanical safety device (88) is provided within the shift power transmission mechanism (80).

3. Automatic transmission control apparatus according to claim 1 or 2, wherein at least a part including the mechanical safety device (88) is structured detachable.

4. Automatic transmission control apparatus according to one of claims 1 to 3, wherein the mechanical safety device (88) is substantially plate-shaped.

5. Automatic transmission control apparatus according to one of claims 1 to 4, wherein the mechanical safety device (88) is included in a shift rod (82).

6. Power unit comprising a transmission apparatus (40) with a plurality of shift gear pairs having different transmission ratios and an automatic transmission control apparatus (50) according to one of claims 1 to 5, whose gear selecting mechanism (43) is configured to select a pair of shift gears (49,420) of the transmission apparatus (40).

7. Power unit according to claim 6, further comprising an engine and a casing storing at least said engine.

8. Power unit according to claim 6 or 7, wherein said shift power transmission mechanism (80) has at least a first transmission mechanism portion (83) and a second transmission mechanism portion (81,82,84), said second transmission mechanism portion (81,82,84) being detachable with respect to said first transmission mechanism portion (83), and said mechanical safety device (88) is provided within said second transmission mechanism portion (81,82,84).

9. Power unit according to claim 8, wherein said first transmission mechanism portion (83) is positioned within said casing, and said second transmission mechanism portion (81,82,84) is positioned out of said casing.

10. Power unit according to claim 8 or 9, wherein said second transmission mechanism portion (81,82,84) has a first member (82A) and a second member (82B) provided closer to said gear selecting mechanism side than said first member (82A), wherein said mechanical safety device (88) is fixed to said second member (82B) between said first member (82A) and said second member (82B), and, preferably, has a power transmission portion (82f,82h,82k) engaging with said first member (82A) so as to transmit the power from said first member (82A) to said second member (82B), and wherein said power transmission portion (82f,82h,82k) is preferably detached from said second member (82B) if said transmitted power becomes larger than the predetermined value (T).

11. Power unit according to claim 8 or 9, wherein said second transmission mechanism portion (81,82,84) has a first member (82A) and a second member (82B) provided closer to said gear selecting mechanism side than said first member (82A), wherein said mechanical safety device (88) is fixed to said first member (88A) between said first member (82A) and said second member (82B), and, preferably, has a power transmission portion (82f,82h,82k) engaging with said second member (82B) so as to transmit the power from said first member (82A) to said second member (82B), and wherein said power transmission portion (82f,82h,82k) is preferably detached from said first member (82A) if said transmitted power becomes larger than the predetermined value (T).

12. Power unit according to claim 10 or 11, wherein an insertion hole (82s), into which said first or second member (82A,82B) is inserted, is formed in the other of said first or second member (82A,82B), and, preferably, a concave portion (82e) is formed in an inner wall surface (82t) of the other of said first or second member (82A,82B) forming said insertion hole (82s), said power transmission portion (82f) being retained in said concave portion (82e).

13. Power unit according to claim 10 or 11, wherein said power transmission portion (82h,82k) has a substantial plate-like body which is inserted into a notch portion (81z), preferably, at an end of a rotatable shaft (81c) of the second transmission mechanism portion (81,82,84).

14. Vehicle, in particular straddle-type vehicle such as a motorcycle, with a power unit according to one of claims 6 to 13.

## Patentansprüche

1. Automatische Getriebesteuerungsvorrichtung, aufweisen:
eine Zahnradauswahlvorrichtung (43), konfiguriert ein Verschiebezahnrad (49. 420) einer Getriebevorrichtung (40) zum Übertragen einer Antriebsleistung von einem Eingang zu einem Ausgang der Getriebevorrichtung (40) auszuwählen;
einen Getriebebetätiger (70), konfiguriert eine Leistung zu erzeugen, um die Zahnradauswahlvorrichtung (43) anzutreiben;
eine Verschiebeleistungs- Übertragungsvorrichtung (80), konfiguriert, die Leistung des Getriebebetätigers (70) auf die Zahnradauswahlvorrichtung (43) zu übertragen;
und **gekennzeichnet durch** eine mechanische Sicherheitsvorrichtung (88), konfiguriert, eine unumkehrbare Zustandsveränderung zu erreichen, in der eine Übertragungsleistung der Verschiebeleistungs- Übertragungsvorrichtung (80) gleich zu oder kleiner als ein vorbestimmter Wert (T) wird, wenn die Übertragungsleistung den vorbestimmten Wert (T) überschreitet,
wobei die mechanische Sicherheitsvorrichtung (88) zumindest einen Leistungsübertragungsabschnitt (82f, 82h, 82k) hat, der dünner als der dicke Abschnitt (82y) ist und konfiguriert ist, sich plastisch zu verformen und / oder zu trennen, wenn die Getriebeleistung den vorbestimmten Wert (T) überschreitet.

2. Automatische Getriebesteuerungsvorrichtung nach Anspruch 1, wobei die mechanische Sicherheitsvorrichtung (88) innerhalb der Verschiebeleistungs- Übertragungsvorrichtung (80) vorgesehen ist.

3. Automatische Getriebesteuerungsvorrichtung nach Anspruch 1 oder 2, wobei zumindest ein Teil, der die mechanische Sicherheitsvorrichtung (88) enthält, lösbar strukturiert ist.

4. Automatische Getriebesteuerungsvorrichtung nach einem der Ansprüche 1 bis 3, wobei die mechanische Sicherheitsvorrichtung (88) im Wesentlichen plattenförmig ist.

5. Automatische Getriebesteuerungsvorrichtung nach einem der Ansprüche 1 bis 4, wobei die mechanische Sicherheitsvorrichtung (88) in einer Schaltstange (82) enthalten ist.

6. Leistungseinheit, aufweisend eine Getriebevorrichtung (40) mit einer Mehrzahl von Verschiebezahnradpaaren, die verschiedene Übertragungsverhältnisse haben, und eine Automatik- Getriebe- Steuerungsvorrichtung (50) nach einem der Ansprüche 1 bis 5, deren Zahnradauswahlvorrichtung (43) konfiguriert ist, ein Paar von Verschiebezahnrädern (49. 420) der Getriebevorrichtung (40) auszuwählen.

7. Leistungseinheit nach Anspruch 6, außerdem aufweisend eine Brennkraftmaschine und ein Gehäuse, das zumindest die Brennkraftmaschine unterbring.

8. Leistungseinheit nach Anspruch 6 oder 7, wobei die Verschiebeleistungs- Übertragungsvorrichtung (80) zumindest einen ersten Getriebevorrichtungsabschnitt (83) und einen zweiten Getriebevorrichtungsabschnitt (81, 82, 84) hat, wobei der zweite Getriebevorrichtungsabschnitt (81, 82, 84) in Bezug auf den ersten Getriebevorrichtungsabschnitt (83) lösbar ist und die Sicherheitsvorrichtung (88) innerhalb des zweiten Getriebevorrichtungsabschnittes (81, 82, 84) vorgesehen ist.

9. Leistungseinheit nach Anspruch 8, wobei der erste Getriebevorrichtungsabschnitt (83) innerhalb des Gehäuses positioniert ist und der zweite Getriebevorrichtungsabschnitt (81, 82, 84) außerhalb des Gehäuses positioniert ist.

10. Leistungseinheit nach Anspruch 8 oder 9, wobei der zweite Getriebevorrichtungsabschnitt (81, 82, 84) ein erstes Teil (82A) und ein zweites Teil (82B), näher vorgesehen zu der Seite der Zahnradauswahlvorrichtung als das erste Teil (82A), hat, wobei die mechanische Sicherheitsvorrichtung (88) an dem zweiten Teil (82B) zwischen dem ersten Teil (82A) und dem zweiten Teil (82B) befestigt ist, und, vorzugsweise ein Leistungsübertragungsabschnitt (82f, 82h, 82k) hat, der mit dem ersten Teil (82A) im Eingriff ist, um die Leistung von dem ersten Teil (82A) zu dem zweiten Teil (82B) zu übertragen und wobei der Leistungsübertragungsabschnitt (82f, 82h, 82k) vorzugsweise von dem zweiten Teil (82B) lösbar ist, wenn diem übertragene Leistung größer als der vorbestimmte Wert (T) ist.

11. Leistungseinheit nach Anspruch 8 oder 9, wobei der zweite Getriebevorrichtungsabschnitt (81, 82, 84) ein erstes Teil (82A) und ein zweites Teil (82B), näher vorgesehen zu der Seite der Zahnradauswahlvorrichtung als das erste Teil (82A), hat, wobei die mechanische Sicherheitsvorrichtung (88) an dem zweiten Teil (82B) zwischen dem ersten Teil (82A) und dem zweiten Teil (82B) befestigt ist, und, vorzugsweise einen Leistungsübertragungsabschnitt (82f, 82h, 82k) hat, der mit dem zweiten Teil (82B) im Eingriff ist, um die Leistung von dem ersten Teil (82A) zu dem zweiten Teil (82B) zu übertragen und wobei der Leistungsübertragungsabschnitt (82f, 82h, 82k) vorzugsweise von dem ersten Teil (82A) lösbar ist, wenn diem übertragene Leistung größer als der vorbestimmte Wert (T) ist.

12. Leistungseinheit nach Anspruch 10 oder 11, wobei eine Einsetzbohrung (82s), in die das erste oder das zweite Teil (82A, 82B) eingesetzt wird, in dem anderen von dem ersten oder zweiten Teil (82A, 82B) gebildet ist, und, vorzugsweise ein konkaver Abschnitt (82e) in einer inneren Wandoberfläche (82t) des anderen von dem ersten oder zweiten Teil (82A, 82B) gebildet ist, der die Einsetzbohrung (82s) bildet, wobei der Leistungsübertragungsabschnitt (82f) in dem konkaven Abschnitt (82e) zurückgehalten wird.

13. Leistungseinheit nach Anspruch 10 oder 11, wobei der Leistungsübertragungsabschnitt (82h, 82k) einen im Wesentlichen plattenförmigen Körper hat, der in einen Aussparungsabschnitt (81z), vorzugsweise an einem Ende einer drehbaren Welle (81 c) des zweiten Getriebevorrichtungsabschnittes (81, 82, 84), eingesetzt ist.

14. Fahrzeug, insbesondere ein Fahrzeug vom Spreitzsitz- Typ, wie z. B. ein Motorrad, mit einer Leistungseinheit nach einem der Ansprüche 6 bis 13.

## Revendications

1. Dispositif de commande de transmission automatique comportant :
un mécanisme de sélection de vitesse (43) configuré pour sélectionner une paire d'engrenages de changement de rapport (49, 420) d'un dispositif de transmission (40), destiné à transmettre une énergie motrice entre une entrée et une sortie du dispositif de transmission (40) ;
un actionneur de changement de vitesse (70) configuré pour générer une énergie permettant d'entraîner ledit mécanisme de sélection de vitesse (43) ;
un mécanisme de transmission d'énergie de changement de vitesse (80), configuré pour transmettre l'énergie dudit actionneur de changement de vitesse (70) audit mécanisme de sélection de vitesse (43) ; et **caractérisé par**
un dispositif de sécurité mécanique (88) configuré pour accomplir un changement irréversible d'état, dans lequel une énergie de transmission du mécanisme de transmission d'énergie de changement de vitesse (80) devient égale ou inférieure à une valeur prédéterminée (T) si ladite énergie de transmission dépasse la valeur prédéterminée (T),
dans lequel le mécanisme de sécurité mécanique (88) possède au moins une partie de transmission d'énergie (82f, 82h, 82k) avec au moins une partie mince (82x) et une partie épaisse (82y), la partie mince (82x) étant plus mince que la partie épaisse (82y) et étant configurée pour se déformer de manière plastique et/ou se rompre si l'énergie de transmission dépasse la valeur prédéterminée (T).

2. Dispositif de commande de transmission automatique selon la revendication 1, dans lequel le dispositif de sécurité mécanique (88) est placé dans le mécanisme de transmission d'énergie de changement de vitesse.

3. Dispositif de commande de transmission automatique selon la revendication 1 ou 2, dans lequel au moins une partie incluant le dispositif de sécurité mécanique (88) est démontable de la structure.

4. Dispositif de commande de transmission automatique selon l'une quelconque des revendications 1 à 3, dans lequel le dispositif de sécurité mécanique (88) possède une forme sensiblement plate.

5. Dispositif de commande de transmission automatique selon l'une quelconque des revendications 1 à 4, dans lequel le dispositif de sécurité mécanique (88) est inclus dans une tige de changement de vitesse.

6. Groupe moteur comportant un dispositif de transmission (40), avec plusieurs paires d'engrenages de changement de rapport possédant différents rapports de transmission, et un dispositif de commande de transmission automatique (50) selon l'une des revendications 1 à 5, dont le mécanisme de sélection de vitesse (43) est configuré pour sélectionner une paire d'engrenages de changement de rapport (49, 420) du dispositif de transmission (40).

7. Groupe moteur selon la revendication 6, comportant en outre un moteur et un carter contenant au moins ledit moteur.

8. Groupe moteur selon la revendication 6 ou 7, dans lequel le mécanisme de transmission d'énergie de changement de vitesse (80) possède au moins une première partie du mécanisme de transmission (83) et une seconde partie du mécanisme de transmission (81, 82, 84), ladite seconde partie du mécanisme de transmission (81, 82, 84) étant démontable par rapport à ladite première partie du mécanisme de transmission (83), et ledit dispositif de sécurité mécanique (88) étant placé dans ladite seconde partie du mécanisme de transmission (81, 82, 84).

9. Groupe moteur selon la revendication 8, dans lequel ladite première partie de mécanisme de transmission (83) est positionnée dans ledit carter, et ladite seconde partie de mécanisme de transmission (81, 82, 84) est positionnée hors dudit carter.

10. Groupe moteur selon la revendication 8 ou 9, dans lequel ladite seconde partie de mécanisme de transmission (81, 82, 84) possède un premier organe (82A) et un second organe (82B) placé plus près du côté dudit mécanisme de sélection de vitesse que dudit premier organe (82A), dans lequel ledit dispositif de sécurité mécanique (88) est fixé sur ledit second organe (82B) entre ledit premier organe (82A) et ledit second organe (82B), et, préférablement, possède une partie de transmission d'énergie (82f, 82h, 82k) qui s'engage avec ledit premier organe (82A) afin de transmettre l'énergie entre ledit premier organe (82A) et ledit second organe (82B), et dans lequel ladite partie de transmission d'énergie (82f, 82h, 82k) est préférablement désolidarisée dudit second organe (82B) si ladite énergie transmise devient supérieure à la valeur prédéterminée (T).

11. Groupe moteur selon la revendication 8 ou 9, dans lequel ladite seconde partie de mécanisme de transmission (81, 82, 84) possède un premier organe (82A) et un second organe (82B) placé plus près du côté dudit mécanisme de sélection de vitesse que dudit premier organe (82A), dans lequel ledit dispositif de sécurité mécanique (88) est fixé sur ledit premier organe (88A) entre ledit premier organe (82A) et ledit second organe (82B), et, préférablement, possède une partie de transmission d'énergie (82f, 82h, 82k) qui s'engage avec ledit second organe (82B) afin de transmettre l'énergie entre ledit premier organe (82A) et ledit second organe (82B), et dans lequel ladite partie de transmission d'énergie (82f, 82h, 82k) est préférablement désolidarisée dudit premier organe (82A) si ladite énergie transmise devient supérieure à la valeur prédéterminée (T).

12. Groupe moteur selon la revendication 10 ou 11, dans lequel un orifice d'insertion (82s), dans lequel est inséré ledit premier ou second organe (82A, 82B), est formé dans l'autre dudit premier ou second organe (82A, 82B), et, préférablement, une partie concave (82e) est formée dans une surface de paroi intérieure (82t) de l'autre dudit premier ou second organe (82A, 82B) formant ledit orifice d'insertion (82s), ladite partie de transmission d'énergie (82f) étant retenue dans ladite partie concave (82e).

13. Groupe moteur selon la revendication 10 ou 11, dans lequel ladite partie de transmission d'énergie (82h, 82k) possède un corps de forme sensiblement plate qui est inséré dans une partie formant une encoche (81z), préférablement, à une extrémité d'un arbre rotatif (81c) de la seconde partie de mécanisme de transmission (81, 82, 84).

14. Véhicule, en particulier véhicule appartenant à un type conduit à califourchon, tel qu'une motocyclette, doté d'un groupe moteur, selon l'une des revendications 6 à 13.
